# EUROPEAN PATENT APPLICATION

(11) **EP 4 799 773 A1**
(43) Date of publication of application: **02.09.2026**
(21) Application number: 25832898.8
(22) Date of filing: 27.06.2025
(51) Int. Cl.: B25J 9/22, G05B 19/42

(54) **WORK ROBOT CONTROL METHOD AND WORK ROBOT**

(30) Priority: 01.07.2024 JP 2024105934
(71) Applicant: Musashi Engineering, Inc., Mitaka-shi, Tokyo 181-0011 (JP)
(72) Inventor: IKUSHIMA, Kazumasa, Mitaka-shi, Tokyo 181-0011 (JP)
(74) Representative: TBK
(86) International application number: PCT/JP2025/023161
(87) International publication number: WO 2026/009820

(57) **Abstract**

Problem: To solve an issue of coordinate discrepancy that occurs when a motion path of a work robot is corrected based on positional information acquired by a positional information measuring device.

Solution: Provided is a work robot control method including: a step of creating a first motion path having first instruction points p and direction change portions (421 to 424); a step of creating a secondary motion path having secondary instruction points P set on the first motion path and arc paths (521 to 525); a step of acquiring positional information at or in a vicinity of the secondary instruction points by a positional information measuring device 30; a step of correcting coordinates of the first instruction points based on the positional information; and a step of performing work by a working device 20 at the corrected first instruction points of the first motion path. Pre-instruction-point paths (531 to 533) that are straight paths entering secondary instruction points P serving as pass points and post-instruction-point paths (541 to 543) are provided, and the pre-instruction-point paths (531 to 533) or the post-instruction-point paths (541 to 543) are continuous with the arc paths, respectively. A work robot 1 is also provided.

## Description

### Technical Field

The present invention relates to a control method of a work robot having a first motion path and a secondary motion path and the work robot.

### Background Art

With respect to a plurality of target workpieces having the same shape, moving a working device mounted on an industrial robot along a work path to iteratively execute the same work (for example, application, processing, or lamination) makes it possible to achieve labor saving in a production process, time saving, and quality improvement. Here, target workpieces for which work is performed may have individual differences in shape or the like and may be set at misaligned positions, leading to a problem that executing the work without correction of a work path causes quality degradation such as occurrence of defective products due to the misalignment of work positions.

As a solution to the above problem, a method is known in which a positional information measuring device (for example, a laser measuring device or an image capturing device) is mounted on the industrial robot, positional information such as a distance to or coordinates of each workpiece is acquired before the work, and feedback is provided to a control device of the industrial robot to reflect correction for the positional information in the iterative motion performed for each target workpiece.

The positional information of the plurality of target workpieces is acquired while moving the positional information measuring device along a measurement path that is set to connect the plurality of target workpieces. Here, there is a problem that performing measurement at a constant movement speed of the positional information measuring device causes vibration at bend points, preventing the positional information from being accurately acquired.

Patent Document 1 proposes an image measuring system in which a smooth measurement path composed of a straight line and an arc having a large radius is automatically generated to avoid steep acceleration and deceleration, thereby suppressing occurrence of vibration without reducing a speed of a robot.

### Prior Art List

### Patent Document

Patent Document 1: Japanese Patent Publication No. 4652252

### Summary of the Invention

### Problems to be Solved by the Invention

By correcting the work path along which the working device moves based on the positional information acquired by the positional information measuring device that moves along the measurement path, an occurrence rate of quality deficiencies caused by the misalignment of work positions is reduced. However, discrepancy may occur between set coordinates that are set on a relative driving device on which the positional information measuring device is mounted and actual coordinates at which the positional information measuring device actually performs measurement. Further, discrepancy may also occur between the set coordinates that are set on the relative driving device on which the working device is mounted and actual coordinates at which the working device actually performs work. Due to the discrepancy between the set coordinates and the actual coordinates that has occurred in the positional information measuring device being different from the discrepancy between the set coordinates and the actual coordinates that has occurred in the working device, there is an issue that, even when feedback correction is performed based on the positional information acquired by the positional information measuring device, the actual coordinates of the working device after the correction still have discrepancy.

In addition, when the positional information is acquired while moving the positional information measuring device, acceleration and deceleration of the positional information measuring device may cause a metering error. This metering error also leads to the issue that the actual coordinates of the working device after the correction still have discrepancy.

Therefore, an object of the present invention is to solve the issue of coordinate discrepancy that occurs when a motion path of a work robot is corrected based on positional information acquired by a positional information measuring device.

### Means for Solving the Problems

A work robot control method according to the present invention includes the following technical means.
[1] A work robot control method including: a step of creating a first motion path having three or more first instruction points and a direction change portion; a step of creating a secondary motion path having three or more secondary instruction points set on the first motion path and an arc path; a step of acquiring positional information at or in a vicinity of the secondary instruction points while moving a positional information measuring device along the secondary motion path; a step of correcting coordinates of the first instruction points of the first motion path based on the positional information; and a step of performing work by a working device at one or more of the first instruction points while moving the working device along the corrected first motion path, wherein the step of creating the secondary motion path includes providing a pre-instruction-point path that is a straight path entering a secondary instruction point serving as a pass point and a post-instruction-point path that is a straight path provided immediately after the secondary instruction point and collinear with the pre-instruction-point path, and the pre-instruction-point path or the post-instruction-point path is continuous with the arc path.
[2] The work robot control method according to [1], wherein the pre-instruction-point path is a straight path that overlaps the first motion path and enters the secondary instruction point from a same direction as the first motion path, or a straight path that is a tangent line to the direction change portion and enters the secondary instruction point from the same direction as the first motion path.
[3] The work robot control method according to [1] or [2], wherein each of secondary instruction points serving as pass points on the secondary motion path has a pre-instruction-point path that is a straight path entering the secondary instruction point and a post-instruction-point path that is a straight path collinear with the pre-instruction-point path.
[4] The work robot control method according to any one of [1] to [3], wherein the step of creating the secondary motion path includes providing a pre-arc straight path and a post-arc straight path to every arc path. Here, the pre-arc straight path and the post-arc straight path preferably have lengths that can attenuate vibration.
[5] The work robot control method according to any one of [1] to [4], wherein the secondary instruction points serving as pass points include a secondary instruction point A and a secondary instruction point B adjacent to the secondary instruction point A, the arc paths include an arc path A and an arc path B, the pre-instruction-point paths include a pre-instruction-point path A that is a straight path entering the secondary instruction point A and a pre-instruction-point path B that is a straight path entering the secondary instruction point B, and the post-instruction-point paths include a post-instruction-point path A that is a straight path provided immediately after the secondary instruction point A and collinear with the pre-instruction-point path A and a post-instruction-point path B that is a straight path provided immediately after the secondary instruction point B and collinear with the pre-instruction-point path B, wherein the post-instruction-point path A acts as a pre-arc straight path A continuous with the arc path A, and the pre-instruction-point path B acts as a post-arc straight path B continuous with the arc path B.
[6] The work robot control method according to [5], wherein the step of creating the secondary motion path includes providing a post-arc straight path A provided immediately after the arc path A and a pre-arc straight path B provided immediately before the arc path B.
[7] The work robot control method according to [5] or [6], wherein the step of creating the secondary motion path includes selecting, as the arc path A, a path following an arc of one of a first circle and a second circle that are tangent to the post-instruction-point path and face each other, the arc satisfying a first condition that the arc has a minimum central angle and/or a second condition that the arc has a minimum distance, and selecting, as the arc path B, a path following an arc of one of a third circle and a fourth circle that are tangent to the post-arc straight path and face each other, the arc satisfying the first condition that the arc has a minimum central angle and/or the second condition that the arc has a minimum distance.
[8] The work robot control method according to [7], wherein a no-entry area is set in a coordinate system of the secondary motion path, and the step of creating the secondary motion path includes selecting, as the arc path A and the arc path B, arc paths that do not enter the no-entry area.
[9] The work robot control method according to any one of [6] to [8], wherein the arc path A is a path following an arc of one out of a first circle and a second circle that are tangent to an end point of the post-instruction-point path A and face each other, and the arc path B is a path following an arc of one out of a third circle and a fourth circle that are tangent to a start point of the pre-instruction-point path B and face each other.
[10] The work robot control method according to [9], wherein the step of creating the secondary motion path includes selecting, as the arc paths A and B, a combination of arc paths selected from among combinations of paths following arcs of two circles out of the first to fourth circles, the arc paths satisfying a first condition that a sum of central angles of the arcs of the two circles is minimum and/or a second condition that a movement distance is minimum.
[11] The work robot control method according to [10], wherein the step of creating the secondary motion path includes selecting, as the arc paths A and B, a combination of arc paths selected from among combinations of paths following arcs of two circles out of the first to fourth circles, the arc paths satisfying a fourth condition that a central angle of an arc of a circle adjacent to a specific secondary instruction point becomes minimum, the fourth condition being applied with precedence over the first condition and the second condition.
[12] The work robot control method according to any one of [8] to [11], wherein the arc paths A and B include an arc path of an ellipse and/or an arc path of a circle composed of composite arcs.
[13] The work robot control method according to any one of [1] to [12], wherein any two adjacent secondary instruction points have different X-coordinates and different Y-coordinates.
[14] The work robot control method according to any one of [1] to [13], wherein the step of creating the secondary motion path includes selecting, as the arc path A, an arc path that is a path following an arc of one out of a first circle and a second circle that are tangent to the post-instruction-point path and face each other, the arc path satisfying a first condition that the arc has a minimum central angle and/or a second condition that the arc has a minimum distance.
[15] The work robot control method according to any one of [1] to [14], wherein a number of the secondary instruction points is smaller than a number of the first instruction points.
[16] The work robot control method according to any one of [1] to [15], wherein the secondary instruction points include one or more first instruction points selected from the first instruction points.
[17] The work robot control method according to any one of [1] to [16], wherein in the first motion path, any adjacent first instruction points are connected by a straight path.
[18] The work robot control method according to any one of [1] to [17], wherein the first motion path includes one or more paths for moving without performing work between first instruction points, and each of the paths for moving without performing work is a straight path.
[19] The work robot control method according to any one of [4] to [12], wherein the post-arc straight path is a path intersecting the secondary motion path located upstream of the post-arc straight path.
[20] The work robot control method according to any one of [1] to [19], wherein the step of acquiring positional information includes moving the positional information measuring device at a speed higher than an average movement speed of the working device.
[21] The work robot control method according to any one of [1] to [16], wherein the step of acquiring positional information includes moving the positional information measuring device at a speed three times an average movement speed of the working device or higher.
[22] The work robot control method according to any one of [1] to [21], wherein the arc path includes an arc path of an ellipse and/or an arc path of a circle composed of composite arcs.
[23] The work robot control method according to any one of [1] to [22], wherein the working device is a discharge device, and the step of performing work at the first instruction points includes causing the working device to perform application while moving with a height maintained constant.
[24] The work robot control method according to any one of [1] to [23], wherein the positional information measuring device is a laser ranging device configured to measure a relative distance to a target to be measured.
[25] The work robot control method according to any one of [1] to [24], wherein the working device and the positional information measuring device are moved in a relative manner by a relative driving device including a first-direction driving device configured to move forward and backward a work head on which the working device is mounted along a beam member in a first direction and a second-direction driving device configured to move forward and backward a table that holds a workpiece along a second direction intersecting the first direction.
   A work robot according to the present invention includes the following technical means.
[26] A work robot including: a working device configured to perform work on a workpiece; a positional information measuring device configured to acquire positional information of the workpiece; a relative driving device configured to move the working device and the positional information measuring device relative to the workpiece; and a control device configured to control operation of the working device, the positional information measuring device, and the relative driving device, wherein the control device is configured to execute: a step of creating a first motion path having three or more first instruction points at which the working device performs work and a direction change portion; a step of creating a secondary motion path having three or more secondary instruction points set on the first motion path and an arc path; a step of acquiring positional information at or in a vicinity of the secondary instruction points while moving the positional information measuring device along the secondary motion path; a step of correcting coordinates of the first instruction points of the first motion path based on the positional information; and a step of performing work by the working device at one or more of the plurality of first instruction points while moving the working device along the corrected first motion path, wherein in the step of creating the secondary motion path, the control device is configured to provide a pre-instruction-point path that is a straight path entering a secondary instruction point serving as a pass point and a post-instruction-point path that is a straight path provided immediately after the secondary instruction point and collinear with the pre-instruction-point path, and the pre-instruction-point path or the post-instruction-point path is continuous with the arc path.
[27] The work robot according to [26], wherein the working device is a discharge device, and in the step of performing work, the control device is configured to cause the working device to perform application while moving with a height maintained constant.
[28] The work robot according to [27], wherein in the step of performing work, the control device is configured to cause application to be continuously performed in a predetermined range of the first motion path including the first instruction point.
[29] The work robot according to [26], wherein the positional information measuring device is a laser ranging device configured to measure a relative distance to a target to be measured.
[30] The work robot according to [26], wherein the control device includes a first measurement command function of causing the positional information measuring device to acquire positional information at the secondary instruction points and a second measurement command function of causing the positional information measuring device to acquire positional information on the pre-instruction-point path, either one of the first measurement command function and the second measurement command function being executed in the step of acquiring positional information.
[31] The work robot according to [30], wherein the second measurement command function includes a function of extending the pre-instruction-point path to an upper stream side by a distance between the secondary instruction point and a measurement position on the pre-instruction-point path and shortening the post-instruction-point path by the distance between the secondary instruction point and the measurement position on the pre-instruction-point path.
[32] The work robot according to any one of [26] to [31], wherein the relative driving device includes a first-direction driving device configured to move forward and backward a work head on which the working device is mounted along a beam member in a first direction and a second-direction driving device configured to move forward and backward a table that holds the workpiece along a second direction intersecting the first direction.

### Advantageous Effect of the Invention

According to the present invention, it is possible to solve the issue of coordinate discrepancy that occurs when a motion path of a work robot is corrected based on positional information acquired by a positional information measuring device.

### Brief Description of the Drawings

[Fig. 1] Fig. 1 is a perspective view illustrating a robot for work according to a first embodiment example.
[Fig. 2] Fig. 2 is a diagram illustrating a first motion path according to the first embodiment example.
[Fig. 3] Fig. 3 is a diagram illustrating a secondary motion path according to the first embodiment example.
[Fig. 4] Fig. 4 is a block diagram explaining a robot control device according to the first embodiment example.
[Fig. 5] Fig. 5 is a flowchart explaining a work procedure by the work robot.

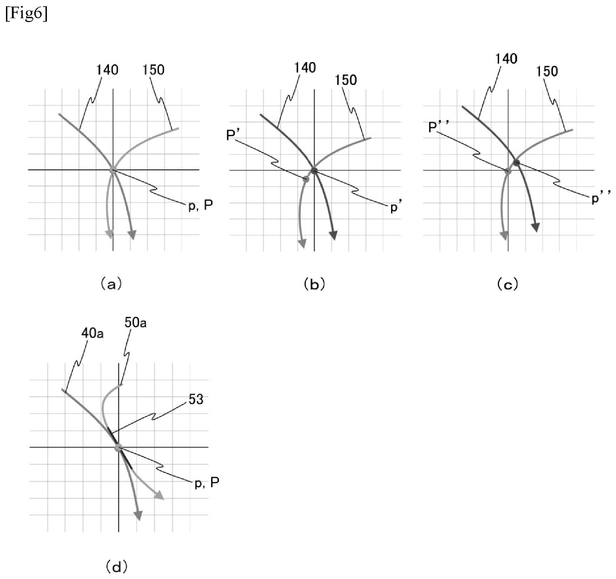

[Fig. 6] Fig. 6 (a) is a diagram illustrating a first motion path and a secondary motion path of a comparative example set by a control program, (b) is a diagram illustrating actual device motions in the first motion path and the secondary motion path of the comparative example, (c) is a diagram illustrating miscorrection in the first motion path and the secondary motion path according to the comparative example, and (d) is a diagram illustrating an example of a corrected first instruction point and a secondary instruction point in a secondary motion path having a pre-instruction-point path that is a tangent line to a first motion path.
[Fig. 7] Fig. 7 is a flowchart explaining a procedure for the robot control device to create a secondary motion path.
[Fig. 8] Fig. 8 is a diagram explaining four secondary instruction points set in the first motion path according to the first embodiment example.
[Fig. 9] Fig. 9 is a diagram explaining a procedure for creating a pre-instruction-point path and a post-instruction-point path with respect to a secondary instruction point in Fig. 8.
[Fig. 10] Fig. 10 is a diagram explaining a procedure for creating pairs of two candidate circles disposed so as to sandwich a pre-instruction-point path and a post-instruction-point path in Fig. 9.
[Fig. 11] Fig. 11 is a diagram explaining a procedure for selecting, from among the candidate circles in Fig. 10, an arc path satisfying a first condition and a second condition as a selected arc path.
[Fig. 12] Fig. 12 shows diagrams explaining a calculation method for selected arc paths, in which (a) is an explanatory diagram of arc paths in a pair of two candidate circles, (b) is an explanatory diagram of a first combination of arc paths, (c) is an explanatory diagram of a second combination of arc paths, (d) is an explanatory diagram of a third combination of arc paths, and (e) is an explanatory diagram of a fourth combination of arc paths.
[Fig. 13] Fig. 13 is a diagram illustrating a secondary motion path according to a second embodiment example.
[Fig. 14] Fig. 14 is a diagram explaining four secondary instruction points set on a first motion path according to the second embodiment example.
[Fig. 15] Fig. 15 is a diagram explaining a procedure for creating a pre-instruction-point path and a post-instruction-point path with respect to a secondary instruction point in Fig. 14.
[Fig. 16] Fig. 16 is a diagram explaining a procedure for creating pairs of two candidate circles disposed so as to sandwich a pre-instruction-point path and a post-instruction-point path in Fig. 15.
[Fig. 17] Fig. 17 is a diagram explaining a procedure for selecting, from among the candidate circles in Fig. 16, an arc path satisfying a first condition and a second condition as a selected arc path.
[Fig. 18] Fig. 18 is a diagram illustrating a first motion path and a secondary motion path according to a third embodiment example.
[Fig. 19] Fig. 19 is a perspective view illustrating a robot for work according to a variation.
[Fig. 20] Fig. 20 is a diagram explaining a secondary motion path according to a variation with an entry-prohibited area.
[Fig. 21] Fig. 21 (a) shows a combination of arc paths satisfying a first condition and a second condition, and (b) shows a combination of arc paths satisfying a fourth condition.
[Fig. 22] Fig. 22 (a) is a diagram explaining a first motion path connecting first instruction points D for spot application set for each of a plurality of workpieces disposed in the same plane, and (b) is a diagram explaining a first motion path connecting first instruction points L for line application set for each of a plurality of workpieces disposed in the same plane.
[Fig. 23] Fig. 23 is a diagram explaining a secondary motion path for performing measurement at secondary instruction points set for each of a plurality of workpieces on a workpiece-by-workpiece basis.
[Fig. 24] Fig. 24 is a diagram explaining a secondary motion path for performing measurement at secondary instruction points set for each of a plurality of workpieces across the workpieces.
[Fig. 25] Fig. 25 shows diagrams illustrating (a) a first circle composed of composite arcs and (b) a second circle composed of composite arcs that are applicable to a candidate circle according to the present invention.

### Mode for Carrying out the Invention

Embodiment examples of the present invention will be described with reference to the drawings. Descriptions are given below with an example of a case where a working device mounted on a relative driving device is a discharge device (dispenser) and a positional information measuring device is a laser ranging device. However, the working device and the positional information measuring device are not limited to the illustrated devices. The working device can employ, for example, an application device other than a dispenser, a processing tool, a lamination head, an irradiation device, or a picking device. The positional information measuring device can employ, for example, a length-measuring device, a contact displacement sensor, or an image capturing device.

### <<First Embodiment Example>>

### (Configuration of Work Robot)

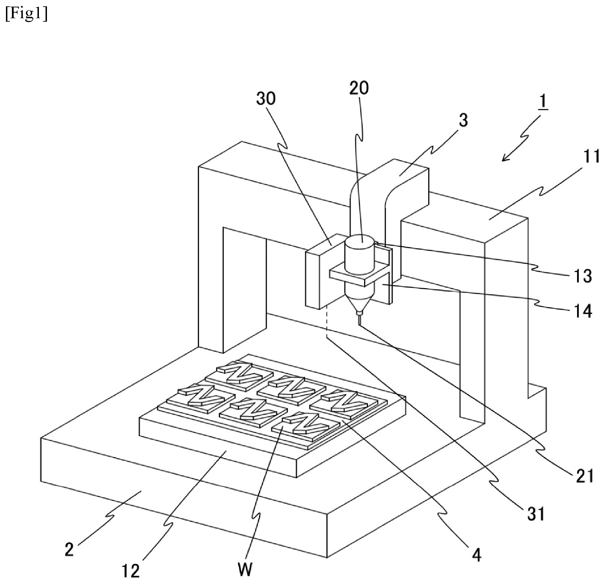

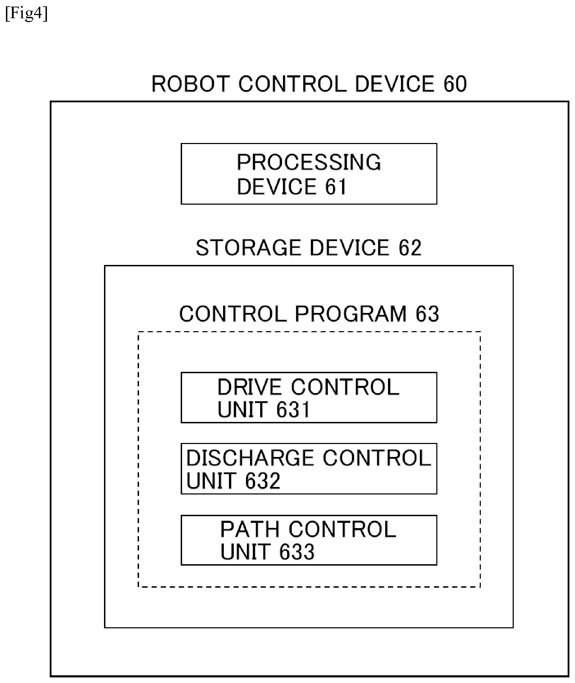

As illustrated in Fig. 1, a work robot 1 of a first embodiment example is a desktop apparatus including a base 2, a work head 3, a relative driving device (11, 12, 13), a discharge device 20, a positional information measuring device 30, and a robot control device 60 (not illustrated in Fig. 1, see Fig. 4).

The relative driving device (11, 12, 13), which includes a first-direction driving device 11 that enables relative movement in an X-direction, a second-direction driving device 12 that enables relative movement in a Y-direction, and a third-direction driving device 13 that enables relative movement in a Z-direction, can move an attachment member 14 and a workpiece basal plate 4 relative to each other in the X-, Y-, Z-directions. The first- to third-direction driving devices 11 to 13 can be configured using, for example, a combination of an electric motor (a servomotor, a stepping motor, or the like) and a ball screw, a linear motor, or the like. Note that the relative driving device is not limited to the illustrated configuration and may employ, for example, a configuration that moves the discharge device 20 and the positional information measuring device 30 in the X-, Y-, Z-directions with the workpiece basal plate 4 fixed, or a configuration that moves the discharge device 20 and the positional information measuring device 30 in the Z-direction and the workpiece basal plate 4 in the X-, Y-directions. Further, the relative driving device may employ a configuration in which a rotating device that rotates the workpiece basal plate 4 is combined with any first- to third-direction driving devices.

The discharge device 20 and the positional information measuring device 30 are detachably attached to a side surface of the attachment member 14. The attachment member 14 is provided on a side surface of the work head 3 via the third-direction driving device 13. The third-direction driving device 13 can move forward and backward the attachment member 14, to which the discharge device 20 and the positional information measuring device 30 are attached, in the Z-direction (vertical direction). The work head 3 can be moved forward and backward in the X-direction by the first-direction driving device 11 having a beam member supported by two supporting poles.

The workpiece basal plate 4 is provided on a table of the second-direction driving device 12 on the base 2. The workpiece basal plate 4 of the present embodiment example is a basal plate on which a plurality of target workpieces W having the same shape are disposed or formed. In the example of Fig. 1, six target workpieces W arranged in a 2-row-by-3-column array are disposed on the workpiece basal plate 4. The second-direction driving device 12 can move forward and backward the workpiece basal plate 4 in the Y-direction perpendicular to the X-direction. Although an example has been described in which the workpiece basal plate 4 on which a plurality of workpieces W are disposed or formed in the same plane is a work target in Fig. 1, the present invention is also applicable to a production process in which target workpieces W are successively transported onto the table one-by-one.

The discharge device 20, which includes a discharge port 21 at its lower end, is a discharge device employing a discharge method in which liquid material comes into contact with a workpiece after separating from a discharge port. Examples of such a discharge method include: a jet type that applies inertial force to liquid material by moving a plunger (valve element) forward and stopping the plunger suddenly to discharge and fly the liquid material from a tip of a nozzle; and an inkjet type employing a continuous inkjet method or a drop-on-demand method. Note that the present invention is also applicable to a case in which a discharge device employing a discharge method in which liquid material flowing out of a discharge port comes into contact with a workpiece before separation is used for line-drawing application while moving it at a constant speed with a clearance between the workpiece and a nozzle kept constant or for spot application at each first instruction point. The present invention is also applicable to discharge devices of, for example: an air type in which, by supplying pressurized gas into a container storing liquid material, the liquid material is discharged from a discharge port; a screw type in which, by rotating a screw having a helical flange formed on a surface of a rod-shaped body in an axial direction, liquid material is conveyed and discharged from a discharge port; a plunger type in which, by retracting a plunger slidably in contact with an inner wall of a measuring hole, the measuring hole is filled with liquid material, and by advancing the plunger, the liquid material is discharged from a discharge port; and the like.

The positional information measuring device 30 is a non-contact ranging device such as a laser displacement meter that measures a distance to a surface of a measurement target by irradiating the measurement target such as a workpiece with laser light. The positional information measuring device 30 has a laser transmitting surface (not illustrated) and a laser receiving surface (not illustrated) on its bottom surface, and measures a relative distance between the positional information measuring device 30 and a measurement target near a focal position 31. Since both the discharge device 20 and the positional information measuring device 30 are fixed to the attachment member 14, by applying a specific conversion value to the above-described relative distance obtained by the positional information measuring device 30, it can be converted into a relative distance between the discharge port 21 and a target workpiece W.

### (First Motion Path 40)

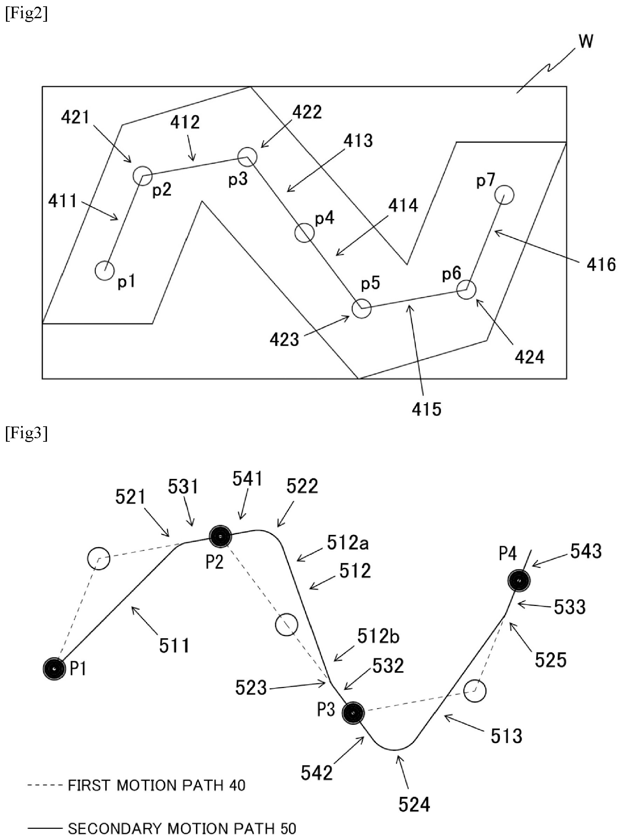

A first motion path 40 is a path that the discharge device 20 as a working device follows when performing work, and the discharge device 20 performs flight discharge at each first instruction point. Fig. 2 shows the first motion path 40 of the present embodiment example, in which points p1 to p7 set on a target workpiece W are first instruction points. As illustrated in Fig. 2, the first motion path 40 of the present embodiment example is a one-stroke path including the first instruction points p1 to p7 indicated by open white circles, first communication paths 411 to 416, and bend points 421 to 424. Any two adjacent first instruction points p are connected by a straight path with the shortest distance.

The first communication paths 411 to 416 are straight paths connecting the first instruction points in the shortest distance. The first communication paths may be curved paths, but they are preferably configured as straight paths with the shortest distances. The four bend points 421 to 424 are first instruction points at which first communication paths that are straight paths intersect each other at an angle. Herein, a path including a bend point and paths before and after the bend point in a first motion path may be referred to as a direction change portion. The present invention is suitable for a first motion path having a plurality of direction change portions. In a control program 63 of the present embodiment example, the discharge device 20 is programmed to move along the first motion path 40 with its height maintained constant without halting. In the control program 63 in a preferable mode, the discharge device 20 is programmed to move from a start point to an end point of the first motion path at a same speed (however, the speed near the start point is not constant due to acceleration and the speed near the end point is not constant due to deceleration). The first instruction points p of the first motion path 40 are not limited to the first instruction points at the illustrated positions, and can be set as first instruction points at any positions. When the positional information measuring device 30 is moved along the first motion path 40, vibration that affects measurement would occur at the bend points 421 to 424 that constitute direction change portions. In order to shorten the time required for positional information measurement, it is necessary to move the positional information measuring device 30 at a speed several times that of the working device or higher. However, simply tracing curved paths or arc paths at the bend points 421 to 424 fails to solve the vibration issue, and it is necessary to create direction change portions in which directions of the paths are more gradually changed.

In addition, as the first-direction driving device 11 and the second-direction driving device 12 perform decelerating operation and accelerating operation at the four bend points 421 to 424 of the first motion path 40, the positional information measuring device 30 cannot accurately perform measurement at or in the vicinity of the bend points 421 to 424. In order for the positional information measuring device 30 to perform measurement accurately, it is important to provide, before and after a secondary instruction point, straight paths in which no decelerating operation and accelerating operation are performed.

### (Secondary Motion Path 50)

A secondary motion path 50 is a one-stroke path that the positional information measuring device 30 follows when performing measurement, and the positional information measuring device 30 performs measurement at or in the vicinity of each secondary instruction point P. Coordinates of a secondary instruction point P of the secondary motion path 50 according to the first embodiment example are the same as coordinates of a first instruction point selected from the first instruction points p of the first motion path 40. Selecting some of the first instruction points of the first motion path 40 as secondary instruction points of the secondary motion path 50 is for reducing the time required for measurement. Positional information of a first instruction point that has not been selected can be calculated based on positional information of or at the vicinity of a secondary instruction point located before or after the first instruction point. It is disclosed that, for example: as secondary instruction points P of the secondary motion path 50, first instruction points of the first motion path are selected by skipping one or skipping two; one to three secondary instruction points P are set per one target workpiece W; or three or more secondary instruction points P are set in total for six workpieces W on the workpiece basal plate 4. As in a second embodiment example described later, a secondary instruction point may be set at a position different from those of the first instruction points.

In the present embodiment example, as indicated by solid black circles in Fig. 3, points P1 (p1 in Fig. 2), P2 (p3 in Fig. 2), P3 (p5 in Fig. 2), and P4 (p7 in Fig. 2) are set as secondary instruction points of the secondary motion path 50. In the control program 63 of the present embodiment example, the positional information measuring device 30 is programmed to move along the secondary motion path 50 with its height maintained constant without halting. Unlike this, the positional information measuring device 30 may be moved along the secondary motion path 50 while changing the height. In the example of Fig. 3, although the secondary instruction points P1 to P4 are set according to the way of numbering the first instruction points p1 to p7, the secondary instruction points may be passed in a different order. For example, in a case where a gap between secondary instruction points is narrow and a motion path automatically generated for a secondary motion path has a large unintended diversion, it is preferable that the order of the secondary instruction points is rearranged to obtain a shorter motion path.

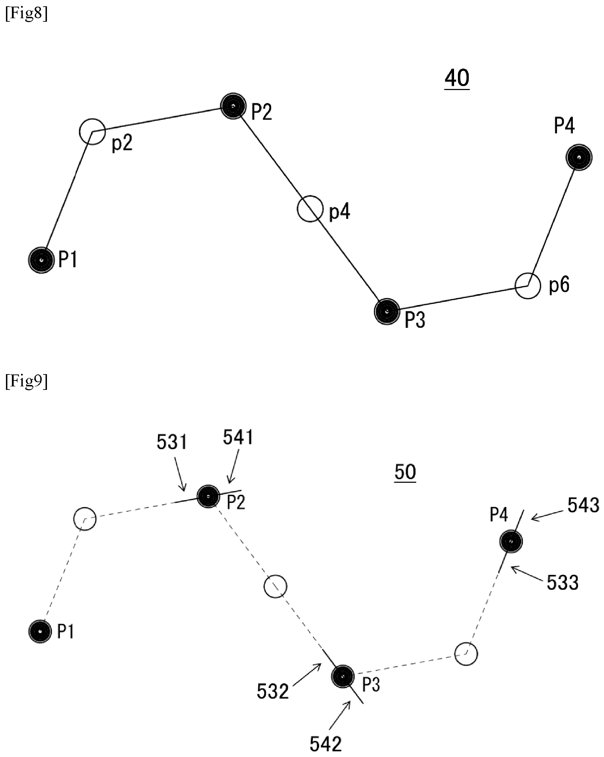

As illustrated in Fig. 3, the secondary motion path 50 according to the first embodiment example includes the secondary instruction points P1 to P4, secondary communication paths 511 to 513, arc paths 521 to 524, pre-instruction-point paths 531 to 533, and post-instruction-point paths 541 to 543. In Fig. 3, for convenience of explanation, a workpiece W is omitted (also in Fig. 8 and subsequent figures, a workpiece W is omitted). Herein, a path interpolating two secondary instruction points may be referred to as an interpolating path. For example, an interpolating path between the secondary instruction points P2 and P3 includes the post-instruction-point path 541, the arc path 522, the secondary communication path 512, the arc path 523, and the pre-instruction-point path 532.

Since the secondary motion path 50 is a path for moving the positional information measuring device 30 in which vibration causes a measurement error, a direction change on an angulated bend point as in the first motion path is infeasible, and a curved path is required for a direction change. In some cases, the positional information measuring device 30 is moved at a speed five times an average movement speed of the working device moving along the first motion path or higher, or at a speed ten to thirty times the average movement speed or higher. In this case, vibration and inertial force become a significant issue. For example, while the speed of the discharge device in a case of performing line application with high-viscosity liquid material is 5 mm/s, the movement speed of the positional information measuring device 30 is 100 mm/s. Note that the positional information measuring device 30 may be moved at a speed lower than that of the working device moving along the first motion path.

In a case where a secondary instruction point is set on or in the vicinity of a curved path, inertial force that occurs during acceleration and deceleration of the positional information measuring device 30 causes a measurement error. In the present embodiment example, by providing an arc path for making a direction change and providing straight paths before and after the arc path, the issue of vibration and inertial force that occur when the positional information measuring device 30 moves at a high speed are solved.

The secondary communication paths 511 to 513 of the present embodiment example are straight paths, and thus moving the positional information measuring device 30 at a high speed along them does not lead to the issue that vibration and inertial force due to acceleration and deceleration affect position measurement. The positional information measuring device 30 makes direction changes in the arc paths 521 to 524 which cause insignificant vibration. Further, as the vibration and inertial force attenuate during passing through the pre-instruction-point paths 531 to 533 and the secondary communication paths 512, 513 that are straight paths, they do not affect the measurement. The pre-instruction-point paths 531 to 533 and the secondary communication paths 512, 513 of the present embodiment example act as post-arc straight paths for attenuating vibration and inertial force resulting from passing through an arc path.

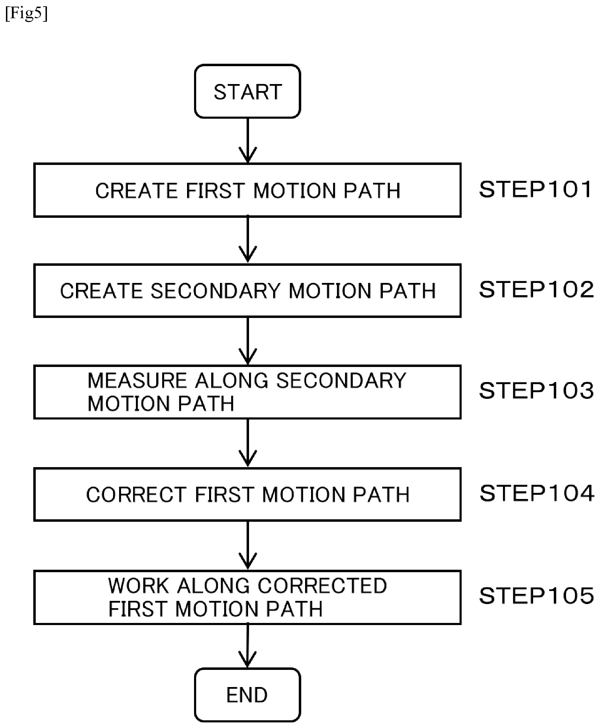

The pre-instruction-point paths 531 to 533 are straight paths for entering the secondary instruction points P2 to P4. From another perspective, the secondary instruction points P2 to P4 serving as pass points are set between the pre-instruction-point paths 531 to 533 and the post-instruction-point paths 541 to 543 that are collinear with each other, respectively. Since the pre-instruction-point paths 531 to 533, the secondary instruction points P2 to P4, and the post-instruction-point paths 541 to 543 are set collinear with each other, respectively, the positional information measuring device 30 can perform measurement at the secondary instruction points P2 to P4 while moving at a constant speed (that is, in a state without vibration and inertial force due to acceleration and deceleration). As in the present embodiment example, in the case where the pre-instruction-point paths 531 to 533 also act as post-arc straight paths, they preferably have lengths that can attenuate vibration and inertial force resulting from passing through the arc paths 521 to 524. Further, the pre-instruction-point paths 531 to 533 are paths that overlap the first motion path 40 and have the same entrance directions as the first motion path 40. Therefore, even when discrepancy occurs between set coordinates and actual coordinates, the discrepancy is substantially equal to discrepancy between set coordinates and actual coordinates in the first motion path 40, and thus it is not problematic. Details will be described later with reference to Fig. 5.

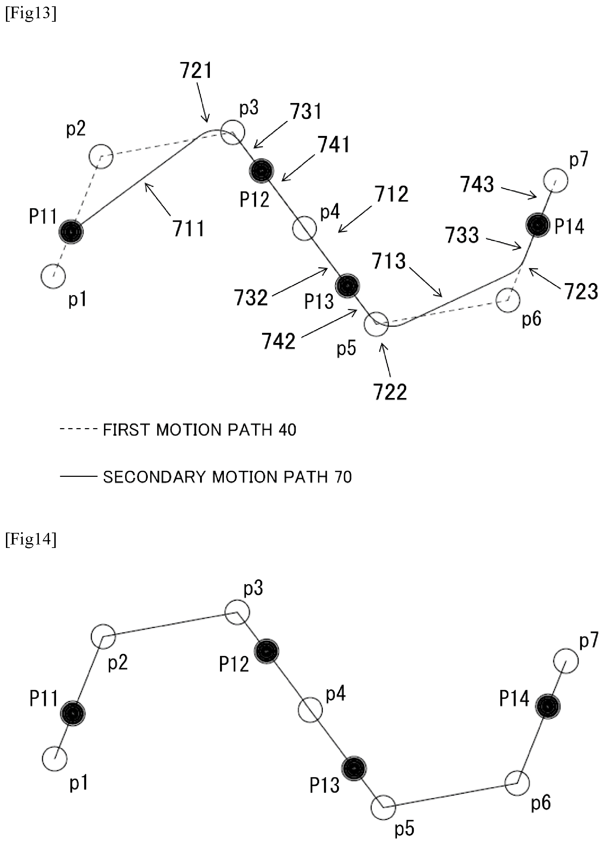

The post-instruction-point paths 541 to 543, which are paths provided immediately after the secondary instruction points P2 to P4 serving as pass points, are provided to allow the positional information measuring device 30 to perform measurement at the secondary instruction points P2 to P4 in a state where it is not affected by acceleration and deceleration. In the present embodiment example, as illustrated in Fig. 3, the post-instruction-point paths 541 to 543 do not overlap the first motion path 40. However, a post-instruction-point path may overlap a first motion path in another secondary motion path (for example, a post-instruction-point path 742 in Fig. 13). The lengths of the pre-instruction-point paths 531 to 533 and the post-instruction-point paths 541 to 543 may be the same or different. The post-instruction-point paths 541 to 543 preferably have lengths that can tolerate a time lag between a transmission timing of a measurement command from the robot control device 60 to the positional information measuring device 30 and an execution timing and tolerate the time required for the positional information measuring device 30 to complete measurement. Instead of the method of absorbing the time lag and the like with the post-instruction-point paths 541 to 543, the measurement command to acquire positional information may be transmitted from the robot control device 60 to the positional information measuring device 30 at a position offset toward an upper stream from a secondary instruction point P.

In the secondary motion path 50 of the present embodiment example, straight paths are also provided before and after an arc path. That is, the secondary motion path 50 includes a direction change portion composed of a pre-arc straight path, an arc path, and a post-arc straight path. The pre-arc straight path and the post-arc straight path may also serve as other straight paths. For example, the direction change portion provided after the secondary instruction point P2 includes the post-instruction-point path 541 that acts as a pre-arc straight path, the arc path 522, and a starting portion 512a of the secondary communication path that acts as a post-arc straight path. The direction change portion provided before the secondary instruction point P3 includes an ending portion 512b of the secondary communication path that acts as a pre-arc straight path, the arc path 523, and the pre-instruction-point path 532 that acts as a post-arc straight path. Providing pre-arc straight paths allows the positional information measuring device 30 to enter each arc path in a state without vibration, and even if vibration and inertial force occur when each arc path is passed through, they attenuate in post-arc straight paths.

The robot control device 60 (not illustrated in Fig. 1) is disposed inside or outside the base 2. As illustrated in Fig. 4, the robot control device 60 includes a processing device 61 and a storage device 62 having the control program 63 stored therein. The control program 63 indicated by dotted lines in Fig. 4 includes a drive control unit 631 that controls operation of the relative driving device (11, 12, 13), a discharge control unit (dispense controller) 632 that controls discharge operation of the discharge device 20, and a path control unit 633 that manages the first motion path 40 and the secondary motion path 50. The path control unit 633 has a function of automatically generating a first motion path 40 based on first instruction points p for which instruction has been given by an administrator, a function of automatically generating a secondary motion path 50 based on the first motion path 40, and a function of automatically correcting the first motion path 40 based on measurement results from the positional information measuring device 30. In addition, the robot control device 60 in a preferable mode includes a first measurement command function of causing the positional information measuring device 30 to acquire positional information at a secondary instruction point P and a second measurement command function of causing the positional information measuring device 30 to acquire positional information on a pre-instruction-point path.

In Fig. 4, although the robot control device 60 configured as a one physical device is illustrated, the drive control unit 631, the discharge control unit 632, and the path control unit 633 may be respectively configured as three physically different control devices. In this case, some or all of the three control devices can be disposed inside or outside the base 2.

### (Work Procedure by Work Robot)

A work procedure by the work robot 1 will be described with reference to Fig. 5.

(STEP 101) Primary instruction points p are set as work positions for a target workpiece W, and a first motion path 40 in which the set first instruction points are connected is created. In a case where movement is performed without work between two adjacent first instruction points p, the two adjacent first instruction points p are preferably connected by a straight path with the shortest distance. After the first instruction points p are set, the robot control device 60 automatically generates the first motion path 40. In the example of Fig. 2, it is created by setting the first instruction points p1 to p7 and connecting the first instruction points p1 to p7 with the first communication paths 411 to 416 that are straight paths.

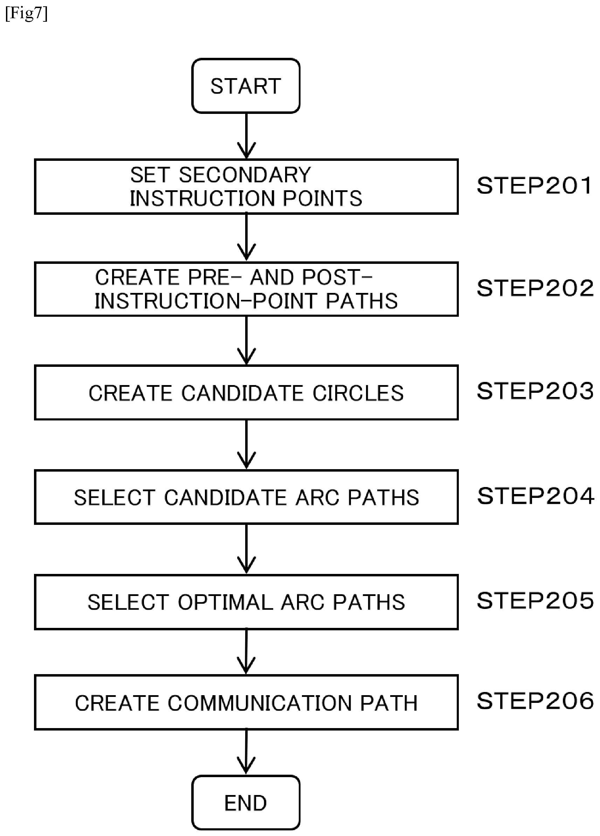

(STEP 102) Secondary instruction points P are set by selecting some of the first instruction points p of the first motion path 40. After the secondary instruction points P are set, the robot control device 60 automatically generates a secondary motion path 50 (see Fig. 7 described later). Note that a configuration may be adopted in which secondary instruction points P are automatically selected from the first instruction points p and the secondary instruction points P are corrected by a user as needed.

(STEP 103) The robot control device 60 causes the positional information measuring device 30 to acquire positional information at or in the vicinity of each secondary instruction point P while moving the positional information measuring device 30 along the created secondary motion path 50. The movement speed of the positional information measuring device 30 is higher than an average movement speed of the working device 20 so that positional information measurement time can be reduced. For example, the movement speed is equal to or higher than three times (preferably, five times, or more preferably, ten times) the average movement speed of the working device 20. Measurement of positional information by the positional information measuring device 30 is desirably performed at the secondary instruction points P, but in some actual cases, measurement of positional information is performed on a pre-instruction-point path or a post-instruction-point path. Herein, a range over a pre-instruction-point path and a post-instruction-point path may be referred to as the vicinity of a secondary instruction point.

Here, in a case where a post-instruction-point path does not overlap the first motion path 40 like the post-instruction-point paths 541 to 542 in Fig. 3, a measurement command to acquire positional information is preferably transmitted to the positional information measuring device 30 at a position in the upper stream from a secondary instruction point P (that is, on a pre-instruction-point path). It is because issuing the measurement command to acquire positional information at a position offset toward the upper stream from the secondary instruction point P allows the positional information measuring device 30 to complete measurement of positional information on the first motion path 40 even in a case where a time lag occurs between a transmission timing of the measurement command from the control device to the positional information measuring device 30 and an execution timing, in a case where the positional information measuring device 30 takes some time to perform measurement, in a case where discrepancy exists between set coordinates in the control program 63 and actual coordinates of the positional information measuring device 30, or the like. Further, when a setting is made to acquire positional information at a position offset toward the upper stream from the secondary instruction point P, the robot control device 60 may include a function of offsetting a start point of the pre-instruction-point path to the upper stream side by a same distance as the above-described offset (that is, extending the pre-instruction-point path toward the upper stream by the offset distance) and offsetting an end point of the post-instruction-point path to the upper stream side by the same distance as the above-described offset (that is, shortening the pre-instruction-point path toward the upper stream by the offset distance).

(STEP 104) Coordinates of the first instruction points p of the first motion path 40 are corrected based on the positional information acquired in STEP 103, and the corrected first motion path 40 is stored in the storage device 62. In the correction of the first motion path 40, not only position coordinates in the horizontal direction but also a position coordinate in the height direction is corrected. Here, depending on a type of the working device employed, the correction of the position coordinate in the height direction may include correction for keeping a clearance of the working device with respect to an inclined workpiece constant.

(STEP 105) Work is performed at each first instruction point p while moving the discharge device 20 along the corrected first motion path 40. Since misalignment of work positions is rectified in the corrected first motion path 40, it is possible to eliminate the issue that position misalignment causes deficiencies in work quality.

### (Miscorrection Issue of Primary Motion Path)

Fig. 6 (a) shows a first motion path 140 and a secondary motion path 150 of a comparative example set by a control program, in which a first instruction point p at which the discharge device 20 is supposed to perform work and a secondary instruction point P at which the positional information measuring device 30 is supposed to perform measurement are set at coordinates of an intersection between an X-axis and a Y-axis. However, even when the coordinates of the first instruction point p specified by the control program matches the coordinates of the secondary instruction point P specified by the control program, discrepancy may occur as illustrated in Fig. 6 (b) between the coordinates of a point p' at which the discharge device 20 actually performs work and the coordinates of a point P' at which the positional information measuring device 30 actually performs measurement. This discrepancy is small, for example, 1 mm or smaller, but affects quality in state-of-the-art electronic components that are being miniaturized. Then, the coordinates of the first instruction point p at which the discharge device 20 is supposed to perform work are corrected based on positional information that is acquired by the positional information measuring device 30 at the point P' having coordinate discrepancy as in Fig. 6 (b), leading to a miscorrection issue that the coordinates of the location at which the discharge device 20 is supposed to perform work are erroneously corrected to a point p" as illustrated in Fig. 6 (c).

In this regard, since the secondary motion path 50 of the first embodiment example includes a pre-instruction-point path composed of a straight path that overlaps the first motion path 40 and enters a secondary instruction point from the same entrance direction as the first motion path 40 (see Fig. 3), it is possible to eliminate the miscorrection issue that would arise when the coordinates of a first instruction point p at which the discharge device 20 is supposed to perform work are corrected based on the positional information acquired by the positional information measuring device 30. Here, the pre-instruction-point path composed of a straight path can overlap a first motion path 40 entering the first instruction point p that is a straight path, but cannot overlap a first motion path 40 entering the first instruction point p that is a curved path. In this case, the pre-instruction-point path is a straight path that has the same entrance direction to the secondary instruction point P as the first motion path 40 and is tangent to the first motion path 40 at the secondary instruction point P (tangent path). Fig. 6 (d) is a diagram illustrating an example of a first instruction point p corrected based on the positional information acquired by the positional information measuring device and a secondary instruction point P on a secondary motion path 50a having a pre-instruction-point path that is a tangent line to a first motion path 40a. In this manner, also by setting a pre-instruction-point path 53 composed of a straight path that has the same entrance direction to the secondary instruction point P as the first motion path 40a and is tangent to the first motion path 40a at the secondary instruction point P, it is possible to eliminate the issue of discrepancy in the coordinates of the secondary instruction point P that are measured by the positional information measuring device 30. It is naturally contemplated that, in some cases, the coordinates of a first instruction point p of the first motion path 40 that have been corrected based on measured positional information and the coordinates of a secondary instruction point P of the secondary motion path 50 in the present invention indicate different coordinates on the control program 63.

### (Creation of Secondary Motion Path 50)

A procedure for the robot control device 60 to create the secondary motion path 50 (STEP 102 described above) will be described with reference to Fig. 7.

(STEP 201) First, a plurality of secondary instruction points P are set on the first motion path 40. In the first embodiment example, a plurality of first instruction points p are selected and set as the secondary instruction points P from among first instruction points p of the first motion path 40. This setting operation may be manually performed by the administrator. Alternatively, the setting may be automatically performed by the control device based on a selected rule for the first instruction points p, such as skipping one or skipping two. Fig. 8 is a diagram explaining a procedure for selecting and setting four secondary instruction points P1 to P4 corresponding to the first instruction points p1, p3, p5, and p7 from among the seven first instruction points of the first motion path 40.

(STEP 202) For the secondary instruction points P other than a path start point of the secondary motion path 50, pre- and post-instruction-point paths composed of straight paths are created. In the first embodiment example, a pre- and post-instruction-point path is a straight path that overlaps the first motion path 40 and enters a secondary instruction point P from the same direction as the first motion path 40. However, as in a third embodiment example described later, it may be a straight path that is a tangent line to the first motion path 40. In the example of Fig. 9, for the secondary instruction points P2 to P4 other than the path start point, the pre-instruction-point path 531 and the post-instruction-point path 541 extending collinearly, the pre-instruction-point path 532 and the post-instruction-point path 542 extending collinearly, and the pre-instruction-point path 533 and the post-instruction-point path 543 extending collinearly are created. Here, in a case where measurement at the secondary instruction point P4 that is a path end point is performed after the positional information measuring device 30 stops moving, a pre- and post-instruction-point path may not be created for the secondary instruction point P4. Unlike the present embodiment example, pre- and post-instruction-point paths may be created for the secondary instruction point P1 that is the path start point.

The lengths of the pre-instruction-point paths 531 to 533 and the post-instruction-point paths 541 to 543 are preferably set in advance in the control program 63. After the pre-instruction-point paths are created, the above-described setting for issuing a measurement command to acquire positional information at a position offset toward an upper stream from a secondary instruction point P may be made. At this time, the above-described function of extending a pre-instruction-point path by the offset distance and shortening a post-instruction-point path by the offset distance may be executed.

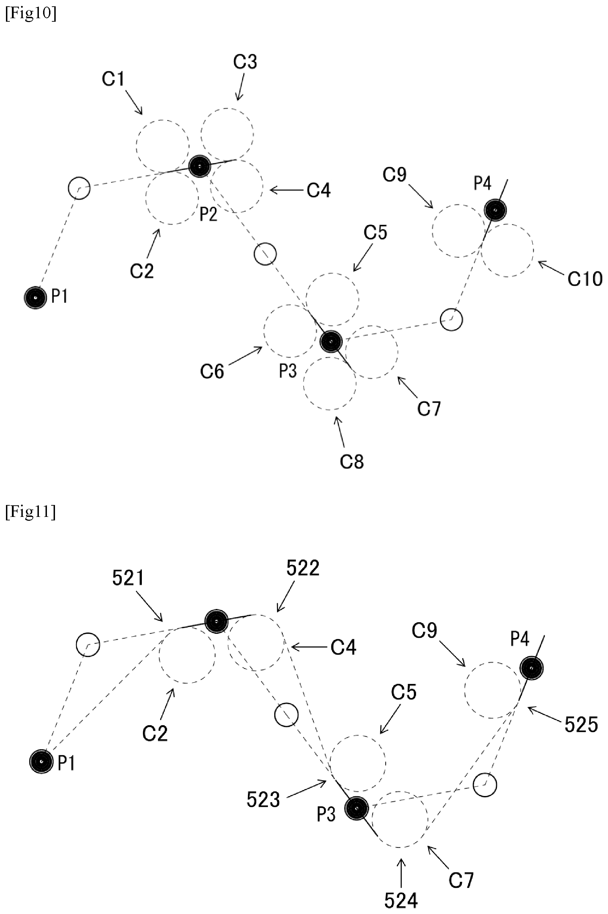

(STEP 203) For each of the pre-instruction-point paths and the post-instruction-point paths created in STEP 202, pairs of two candidate circles disposed so as to sandwich the pre-instruction-point path and the post-instruction-point path are created. The candidate circles are created with a radius that is set depending on a movement speed on the secondary motion path 50 or a radius that is automatically calculated depending on the movement speed. In the present embodiment example, six candidate circles that are tangent to the pre-instruction-point paths 531 to 533 at or near their start points and four candidate circles that are tangent to the post-instruction-point paths 541 to 542 at or near their end points are created. Here, candidate circles are not created for the post-instruction-point path 543 since it serves as the end point of the secondary motion path 50. In addition, in a case where pre- and post-instruction-point paths of two adjacent secondary instruction points are collinear with each other, candidate circles are not created (for example, secondary instruction points P12 and P13 in Fig. 13). By carrying out STEP 203, the ten candidate circles C1 to C10 are created as illustrated in Fig. 10.

(STEP 204) Selected arc paths following candidate circles that have been created are calculated such that they go around a secondary instruction point P serving as a pass point are calculated. For one candidate circle, two arc paths can be assumed. However, because it is necessary to suppress vibration and inertial force that occur at the time of a direction change to the extent possible, an arc path that will make a direction change in the opposite direction to a pre-instruction-point path is not an option (prerequisite). The control program 63 selects the one viable arc path for each candidate circle. Note that a candidate circle is not limited to a perfect circle, and may be an ellipse or may be a circle composed of composite arcs described later.

(STEP 205) The control program 63 extracts paths in which the sum of the central angles of two arcs is minimum (first condition) from among combinations of the viable arc paths. When a plurality of options satisfying the first condition remain, paths with a shorter movement distance are extracted (second condition). When a plurality of options satisfying the first condition and the second condition remain, whichever option selected includes optimal arc paths. In the present embodiment example, a path calculated first after the extraction according to the first condition and the second condition is specified to be selected, but a path calculated last may be selected. Further, the extraction according to the second condition may be performed first, and then the extraction according to the first condition may be performed. In the present embodiment example, the arc paths 521 to 525 that are arcs of the candidate circles C2, C4, C5, C7, C9 illustrated in Fig. 11 are selected as 'selected arc paths' satisfying the first condition and the second condition.

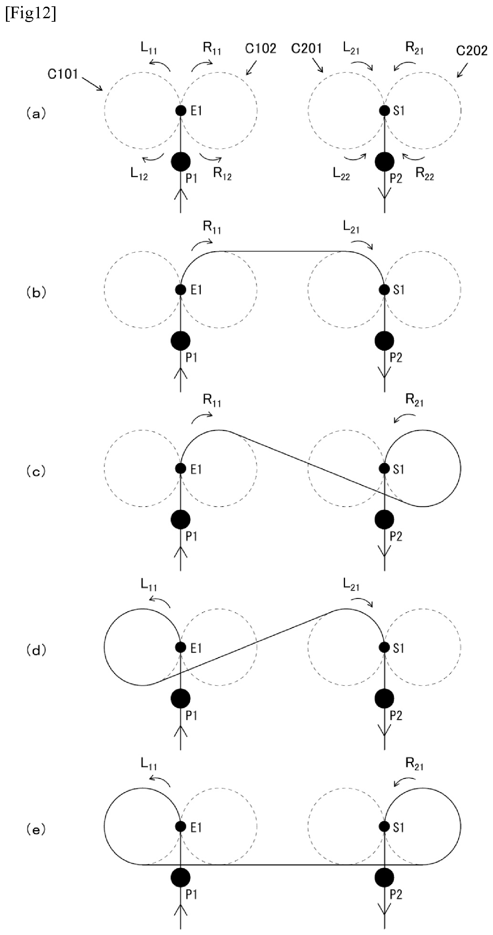

A calculation method for selected arc paths will be described with reference to Fig. 12. Fig. 12 (a) to (e) shows two candidate circles C101 to C102 tangent to an end point E1 of a post-instruction-point path continuous with a secondary instruction point P1, and two candidate circles C201 to C202 tangent to a start point S1 of a pre-instruction-point path continuous with a secondary instruction point P2. As illustrated in Fig. 12 (a), there are four paths L₁₁, L₁₂, R₁₁, R₁₂ as the arc paths following the two candidate circles C101 to C102 adjacent to the secondary instruction point P1, and there are four paths L₂₁, L₂₂, R₂₁, R₂₂ as the arc paths following the two candidate circles C201 to C202 adjacent to the secondary instruction point P2. Here, considering an entrance direction to the secondary instruction point P1, direction changes are made from the entrance direction to opposite directions to reach the arc paths L₁₂, R₁₂, and thus the arc paths L₁₂, R₁₂ are excluded as being unselectable (above-described prerequisite). Considering an exit direction from the secondary instruction point P2, direction changes are necessary from the arc paths L₂₂, R₂₂ to opposite directions to reach the exit direction, and thus the arc paths L₂₂, R₂₂ are excluded as being unselectable (above-described prerequisite). Therefore, combinations of selectable arc paths include the arc paths L₁₁, R₁₁ for P1 and the arc paths L₂₁, R₂₁ for P2. Then, optional combinations of arc paths are four combinations of the arc paths L₁₁, R₁₁ and the arc paths L₂₁, R₂₁.

Fig. 12 (b) shows a path when combining the arc paths R₁₁, L₂₁ as a first optional combination. Fig. 12 (c) shows a path when combining the arc paths R₁₁, R₂₁ as a second optional combination. Fig. 12 (d) shows a path when combining the arc paths L₁₁, L₂₁ as a third optional combination. Fig. 12 (e) shows a path when combining the arc paths L₁₁, R₂₁ as a fourth optional combination of arc paths. In the example of Fig. 12, the combination of arc paths of (b) satisfying the first condition in step 205 is selected as the selected arc paths. In the example of Fig. 12, since the secondary instruction point P1 and the secondary instruction point P2 have the same Y-coordinate, a direction change can be made in one large arc path connecting the end point E1 and the start point S1, which is an exceptional case (note that, as in Fig. 12, a direction change portion in which two arc paths are combined has a shorter path length). In a typically-assumed case in the present invention, the secondary instruction point P1 and the secondary instruction point P2 have different X-coordinates and different Y-coordinates. In this case, a direction change is required to be made by combining two arc paths.

(STEP 206) The control program 63 creates a communication path connecting two arc paths selected in STEP 205. This results in, as illustrated in Fig. 3, the secondary motion path 50 including the secondary communication paths 511 to 513, the arc paths 521 to 524, the pre-instruction-point paths 531 to 533, and the post-instruction-point paths 541 to 543.

Note that STEPs 202 to 205 may be performed not for all the secondary instruction points but to determine an interpolating path between two adjacent secondary instruction points in order from the start point side. That is, STEPs 202 to 205 may be carried out to determine an interpolating path between the secondary instruction points P1 to P2, STEPs 202 to 205 may be subsequently carried out to determine an interpolating path between the secondary instruction points P2 to P3, and STEPs 202 to 205 may be subsequently carried out to determine an interpolating path between the secondary instruction points P3 to P4.

In the secondary motion path 50 created through the STEPs above, every direction change is made in a combination of a pre-arc straight path, an arc path, and a post-arc straight path. Therefore, it is possible to solve the problem of erroneous measurement due to vibration and inertial force that occur at the time of the direction change of the positional information measuring device 30 moving faster than the discharge device 20. By providing pre- and post-instruction-point paths composed of straight paths before and after a secondary instruction point, it becomes possible to measure positional information at the secondary instruction point while moving at a constant speed, which solves the problem of erroneous measurement due to vibration and inertial force. Since the positional information measuring device 30 enters the secondary instruction points P2 to P4 through the pre-instruction-point paths 531 to 533 that overlap the first motion path 40 and enter from the same directions as the first motion path 40, it is possible to solve the problem of coordinate discrepancy that occurs when feedback correction is performed based on the positional information acquired by the positional information measuring device 30. The secondary motion path 50 of the present embodiment example is suitable for application to a narrow application surface, application to a protruded portion or a recessed portion that requires pinpoint application, and the like.

### <<Second Embodiment Example>>

A work robot 1 of a second embodiment example includes, as in the first embodiment example, a base 2, a work head 3, a relative driving device (11, 12, 13), a discharge device 20, a positional information measuring device 30, and a robot control device 60. A secondary motion path 70 of the second embodiment example is different from the secondary motion path 50 of the first embodiment example in that secondary instruction points P11 to P14 do not coincide with first instruction points p1 to p7. Hereinafter, differences from the first embodiment example will be mainly described, and descriptions of similar points will be omitted.

A first motion path 40, which is the same as that in the first embodiment example, is provided with bend points (first instruction points p2 to p6 in Fig. 13) obtained by connecting the first instruction points by straight paths.

As illustrated in Fig. 13, the secondary motion path 70 of the second embodiment example is a one-stroke path in which the secondary instruction points P11 to P14 are connected, and the positional information measuring device 30 performs measurement at each secondary instruction point P. As illustrated in Fig. 14, the secondary instruction points P11 to P14 of the second embodiment example are set on the first motion path 40 shown in dotted lines at positions that do not coincide with the first instruction points p1 to p7. The secondary instruction points P are determined based on factors such as unevenness of a workpiece surface, a shape of the first motion path, objects disposed around the first motion path, required measurement accuracy, and measurement time.

The secondary motion path 70 according to the second embodiment example includes, as in the first embodiment example, pre- and post-instruction-point paths composed of straight paths for each secondary instruction point. That is, the secondary motion path 70 includes pre-instruction-point paths 731 to 733 and post-instruction-point paths 741 to 743. Providing pre- and post-instruction-point paths (731 to 733, 741 to 743) composed of straight paths before and after each secondary instruction point serving as a pass point enables measuring positional information at the secondary instruction point while moving at a constant speed, and the problem of erroneous measurement due to vibration and inertial force is solved.

The secondary motion path 70 according to the second embodiment example includes arc paths 721 to 723 for making direction changes. Before the arc paths 721 to 723, straight paths (711, 742, 713) that act as pre-arc straight paths are provided, allowing the positional information measuring device 30 to enter each arc path in a state without vibration. After the arc paths 721 to 723, straight paths (731, 713, 733) that act as post-arc straight paths are provided to attenuate vibration resulting from passing through each arc path, preventing measurement from being affected. That is, the positional information measuring device 30 moving along the secondary motion path 70 makes direction changes at direction change portions including the arc paths 721 to 723 and pre- and post-arc straight paths. Therefore, erroneous measurement due to vibration and inertial force that affect measurement does not occur.

Further, the pre-instruction-point paths 731 to 733 are paths that overlap the first motion path 40 and enter secondary instruction points P from the same directions as the first motion path 40. Therefore, even when discrepancy occurs between set coordinates and actual coordinates, the discrepancy is substantially equal to discrepancy between set coordinates and actual coordinates in the first motion path 40, and thus it is not problematic as in the first embodiment example.

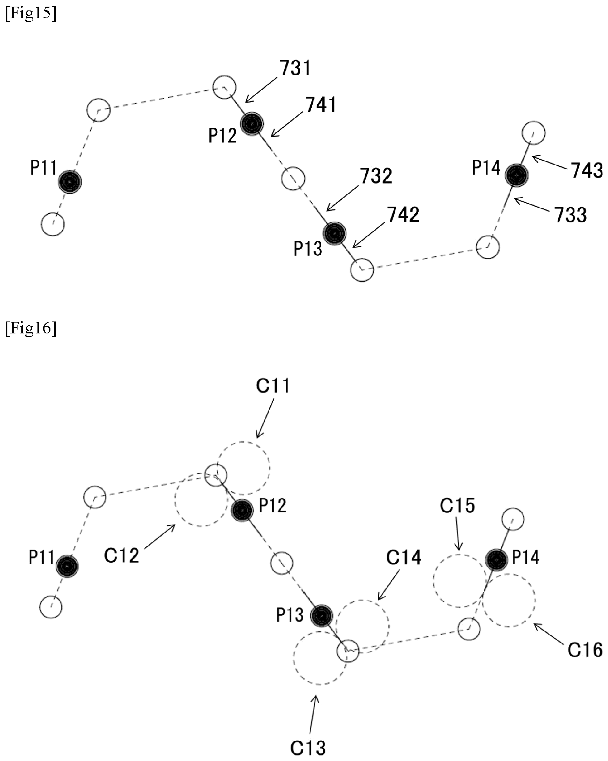

A procedure for creating the secondary motion path 70, which is similar to the procedure for creating the secondary motion path 50, is performed as illustrated in Fig. 7. In STEP 201, the secondary instruction points P11 to P14 illustrated in Fig. 14 are set. In STEP 202, as illustrated in Fig. 15, for the secondary instruction points P12 to 14 other than the path start point, the pre-instruction-point paths 731 to 733 and the post-instruction-point paths 741 to 743 are created.

In STEP 203, for each of the pre-instruction-point paths and the post-instruction-point paths created in STEP 202, pairs of two candidate circles C11 to C16 disposed so as to sandwich the pre-instruction-point path and the post-instruction-point path are created (see Fig. 16). Here, as with the case of the secondary instruction points P12 and P13, when pre- and post-instruction-point paths of two adjacent secondary instruction points are collinear with each other, candidate circles may not be created.

In STEP 204, selected arc paths following candidate circles, each of which has been created upstream or downstream of a secondary instruction point P serving as a pass point, are calculated, and one arc path is selected for each pair of two candidate circles. A selection procedure is similar to that of the first embodiment example.

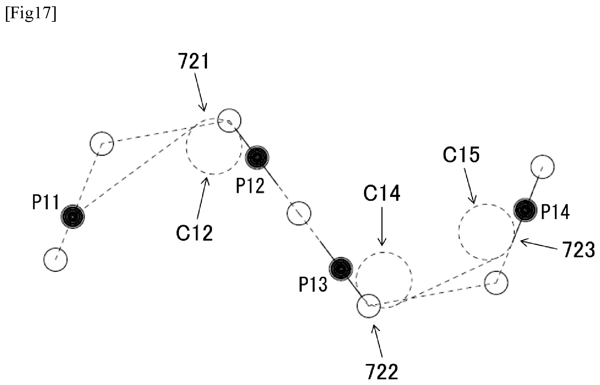

In STEP 205, as in the procedure of the first embodiment example, paths in which the sum of the central angles of two arcs is minimum (first condition) and paths with a shorter movement distance (second condition) are extracted from among combinations of the viable arc paths. In the present embodiment example, the arc paths 721 to 723 that are arcs of the candidate circles C12, C14, C15 illustrated in Fig. 17 are selected as the selected arc paths satisfying the first condition and the second condition.

By carrying out the procedure of STEPs 201 to 205, the secondary motion path 70 illustrated in Fig. 13 is created. Note that STEPs 202 to 205 may be performed not for all the secondary instruction points but to determine an interpolating path between two adjacent secondary instruction points in order from the start point side as in the first embodiment example.

In the secondary motion path 70 of the second embodiment example described above, every direction change is made in a combination of a pre-arc straight path, an arc path 721 to 723, and a post-arc straight path. Therefore, it is possible to solve the problem of erroneous measurement due to vibration and inertial force that occur at the time of the direction change of the positional information measuring device 30 moving faster than the discharge device 20. By providing pre- and post-instruction-point paths composed of straight paths before and after a secondary instruction point, it becomes possible to measure positional information at the secondary instruction point while moving at a constant speed, which solves the problem of erroneous measurement due to vibration and inertial force. Further, since the positional information measuring device 30 enters the secondary instruction points P12 to P14 through the pre-instruction-point paths 731 to 733 that overlap the first motion path 40 and enter from the same directions as the first motion path 40, it is possible to solve the problem of coordinate discrepancy that occurs when feedback correction is performed based on the positional information acquired by the positional information measuring device 30. In addition, in the secondary motion path 70 of the present embodiment example, a secondary instruction point P is set between two adjacent first instruction points p, allowing positional information of the two first instruction points p sandwiching the secondary instruction point P to be precisely calculated with the fewer number of secondary instruction points P.

### <<Third Embodiment Example>>

A work robot 1 of a third embodiment example includes, as in the first embodiment example, a base 2, a work head 3, a relative driving device (11, 12, 13), a discharge device 20, a positional information measuring device 30, and a robot control device 60. Hereinafter, differences from the first embodiment example will be mainly described, and descriptions of similar points will be omitted.

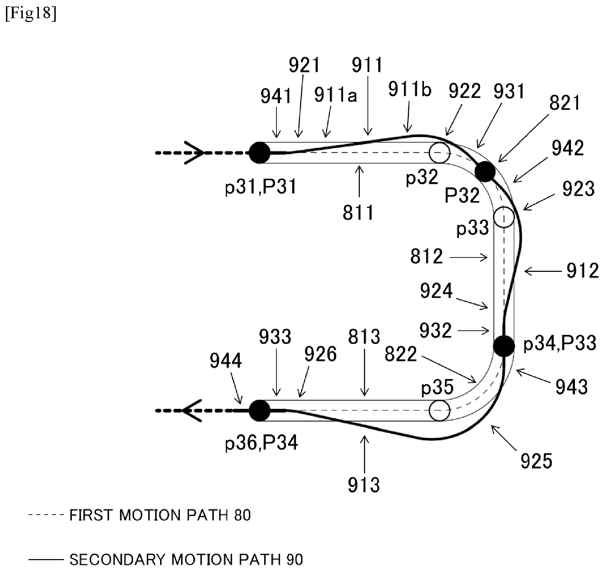

As illustrated in Fig. 18, a first motion path 80 of the third embodiment example is a one-stroke path in which first instruction points p31 to p36 are connected. The discharge device 20 that is a working device performs application in one line from the first instruction point p31 as a start point to the first instruction point p36 as an end point through the first instruction points p32 to p35. The first motion path 80 of the present embodiment example includes first communication paths 811 to 813 composed of straight paths, and arc paths 821, 822. In the first motion path 80, the first instruction points p32 to p35 are set at start points or end points of the arc paths 821, 822. In the arc paths 821, 822, the first-direction driving device 11 and the second-direction driving device 12 perform decelerating operation and accelerating operation, and the start point or the end point of the arc paths 821, 822 is affected by vibration and inertial force. For this reason, when the first motion path 80 is employed as a secondary motion path as it is, the positional information measuring device 30 cannot accurately perform measurement at a secondary instruction point P32.

In addition, when a secondary instruction point is set on an arc path, it is necessary to generate a control command for measuring positional information in conjunction with a control command for moving along the arc path. This results in complicated signal processing and non-constant operation timings at which the robot control device 60 acquires positional information, causing a measurement error. If a secondary instruction point is set on the arc path 821 including the start point and the end point of the arc, measurement cannot be correctly performed as described above. Thus, the first motion path 80 illustrated in Fig. 18 cannot be used as a secondary motion path as it is. Therefore, it needs to be replaced with a motion path having the secondary instruction point not on the arc path (that is, a motion path having the secondary instruction point on a straight path) as a secondary motion path. Specifically, it is necessary to create a secondary motion path having a direction change portion different from the arc paths 821, 822.

A secondary motion path 90 of the third embodiment example is a one-stroke path having secondary instruction points P31 to P34 set on the first motion path 80, and the positional information measuring device 30 performs measurement at each secondary instruction point P. The secondary motion path 90 of the present embodiment example includes secondary communication paths 911 to 913, arc paths 921 to 926, pre-instruction-point paths 931 to 933, and post-instruction-point paths 941 to 943.

The post-instruction-point path 941 composed of a straight path is provided immediately after the secondary instruction point P31 serving as a path start point. The post-instruction-point path 941 is provided immediately before the arc path 921 and acts as a pre-arc straight path. The secondary communication path 911 composed of a straight path is provided immediately after the arc path 921. A starting portion 911a of the secondary communication path acts as a post-arc straight path for attenuating vibration and inertial force resulting from passing through the arc path 921.

The arc path 922 is provided immediately after the secondary communication path 911. An ending portion 911b of the secondary communication path acts as a pre-arc straight path. The pre-instruction-point path 931 composed of a straight path is provided immediately after the arc path 922. The pre-instruction-point path 931 acts as a post-arc straight path for attenuating vibration and inertial force resulting from passing through the arc path 922. The secondary instruction point P32 and the post-instruction-point path 942 are set collinear with the pre-instruction-point path 931. The pre-instruction-point path 931 and the post-instruction-point path 942 constitute one straight path that has the same entrance direction as the first motion path 80 and is a tangent line to the first motion path 80. Since the pre-instruction-point path 931, the secondary instruction point P32, and the post-instruction-point path 942 are set collinear with each other, the positional information measuring device 30 can perform measurement at the secondary instruction point P32 while moving at a constant speed (that is, in a state without inertial force due to acceleration and deceleration).

The arc path 923 is provided immediately after the post-instruction-point path 942. The post-instruction-point path 942 acts as a pre-arc straight path. The secondary communication path 912 composed of a straight path is provided immediately after the arc path 923. The arc path 924 is provided immediately after the secondary communication path 912. A starting portion of the secondary communication path 912 acts as a post-arc straight path, and an ending portion thereof acts as a pre-arc straight path. The pre-instruction-point path 932 composed of a straight path is provided immediately after the arc path 924. The pre-instruction-point path 932 acts as a post-arc straight path for attenuating vibration and inertial force resulting from passing through the arc path 924.

The secondary instruction point P33 and the post-instruction-point path 943 are set collinear with the pre-instruction-point path 932. Since the pre-instruction-point path 932, the secondary instruction point P33, and the post-instruction-point path 943 are set collinear with each other, the positional information measuring device 30 can perform measurement at the secondary instruction point P33 while moving at a constant speed.

The arc path 925 is provided immediately after the post-instruction-point path 943. The post-instruction-point path 943 acts as a pre-arc straight path. The secondary communication path 913 composed of a straight path is provided immediately after the arc path 925. The arc path 926 is provided immediately after the secondary communication path 913. A starting portion of the secondary communication path 913 acts as a post-arc straight path, and an ending portion thereof acts as a pre-arc straight path. The pre-instruction-point path 933 composed of a straight path is provided immediately after the arc path 926. The pre-instruction-point path 933 acts as a post-arc straight path for attenuating vibration and inertial force resulting from passing through the arc path 926.

The secondary instruction point P34 and the post-instruction-point path 944 are set collinear with the pre-instruction-point path 933. Since the pre-instruction-point path 933, the secondary instruction point P34, and the post-instruction-point path 944 are set collinear with each other, the positional information measuring device 30 can perform measurement at the secondary instruction point P34 while moving at a constant speed.

Since the secondary motion path 90 of the third embodiment example described above enables measuring positional information at the secondary instruction points while moving at a constant speed, it is possible to solve the problem of erroneous measurement due to vibration and inertial force. Further, since the pre-instruction-point path 931 is provided so as to be a tangent line to the arc path 821 of the first motion path 80 and enter the secondary instruction point P32 from the same direction as the first motion path 80, it is possible to solve the problem of coordinate discrepancy that occurs when feedback correction is performed based on the positional information acquired by the positional information measuring device 30. In addition, the secondary motion path 90 of the present embodiment example, in which measurement of positional information is performed while moving at a constant speed on a straight path, makes it possible to reduce the computational burden when a control command is generated.

Variations of the first embodiment example will be described below.

### (Variation of Work Robot)

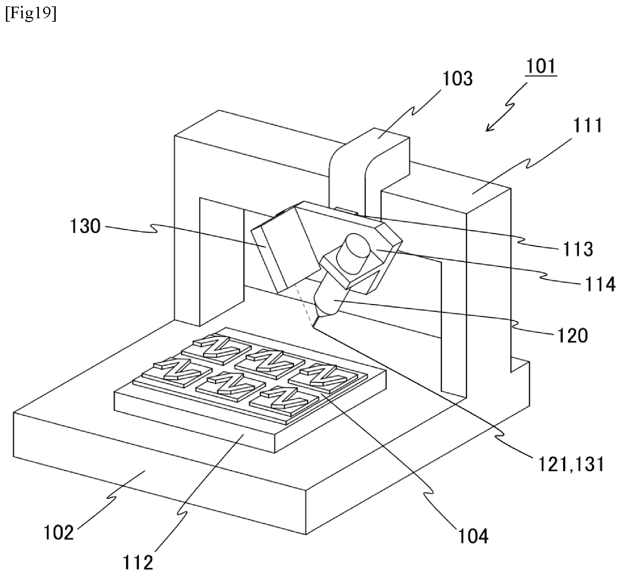

Fig. 19 is a perspective view illustrating a work robot 101 according to a variation. As illustrated in Fig. 19, the work robot 101 according to the variation is a desktop apparatus including a base 102, a work head 103, a relative driving device (111, 112, 113), a robot control device (not illustrated), a discharge device 120, and a positional information measuring device 130. A hardware configuration of the work robot 101 is the same as that of the work robot 1 of the first embodiment example except that the discharge device 120 and the positional information measuring device 130 are attached to an attachment member 114 such that a discharge direction and a measurement direction intersect each other.

In the work robot 101, the discharge device 120 and the positional information measuring device 130 are attached to the attachment member 114 such that a focal position 131 of the positional information measuring device 130 is located on a vertical line passing through the center of a discharge port 121. Thus, when XY coordinates of a first instruction point p specified for the discharge device 120 to perform discharge match XY coordinates of a secondary instruction point P specified for the positional information measuring device 130 to perform measurement, respective positions of XY coordinates of the work head 103 are the same or similar. In other words, a posture of the work head 103 when the discharge device 120 performs discharge at the first instruction point p (coordinates X1, Y1) and the posture of the work head 103 when the positional information measuring device 130 performs measurement at the secondary instruction point P (coordinates X1, Y1) can be the same or similar. Therefore, according to the work robot 101 according to the variation, it is possible to more precisely solve the problem of coordinate discrepancy that occurs when feedback correction is performed based on the positional information acquired by the positional information measuring device 130.

### (Variation with No-entry Area)

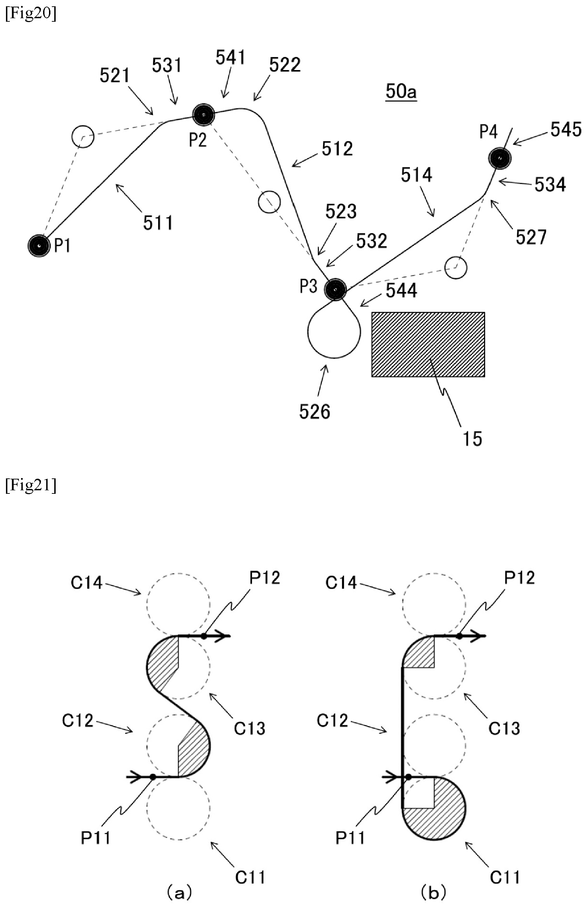

Fig. 20 shows a variation in which there is a no-entry area 15 at a position where candidate circles for a secondary motion path 50a will be created.

The secondary motion path 50a illustrated in Fig. 20 has secondary instruction points P1 to P4 of which coordinates are the same as those of the secondary motion path 50 illustrated in Fig. 3, but is different from the secondary motion path 50 in that the no-entry area 15 has been set in the vicinity of the secondary instruction point P3. In the example illustrated in Fig. 20, since the arc path 524 illustrated in Fig. 3 cannot be set, it is necessary to set an arc path which is different from the arc path 524. That is, before extracting arc paths satisfying the first condition and the second condition described above, a step of extracting a path that does not enter the no-entry area 15 is required (third condition).

In the present variation, the candidate circle C7 illustrated in Fig. 10 is not selected because it does not satisfy the third condition, and the candidate circle C8 is selected to create an arc path 526. Based on this arc path 526, a secondary communication path 514, an arc path 527, a pre-instruction-point path 534, and a post-instruction-point path 545 are created. In this manner, the third condition that takes precedence over the first to second conditions may be added to carry out STEP 205. Fig. 20 illustrates an example in which a post-instruction-point path 544 created with an initially-set distance does not enter the no-entry area 15. However, the distance of the post-instruction-point path 544 may be automatically adjusted to be shorter so that it does not enter the no-entry area 15.

As described above, the technical idea of the present invention is also applicable to a case where an entry-prohibited area is provided in the vicinity of a secondary instruction point.

### (Variation of Arc Path Selection Condition)

The control program 63 can set a fourth condition for extracting paths in which the central angle of an arc close to a specific secondary instruction point is minimum with precedence over the first condition and the second condition described above.

Fig. 21 (a) shows a combination of arc paths satisfying the first condition and the second condition, and (b) shows a combination of arc paths satisfying the fourth condition. As illustrated in Fig. 21 (a) and (b), for two adjacent secondary instruction points P11 and P12, pre-instruction-point paths are set so as to both enter respective secondary instruction points from the X-direction. By carrying out STEP 203 described above, candidate circles C11, C12 adjacent to a post-instruction-point path of the secondary instruction point P11 and candidate circles C13, C14 adjacent to a pre- and post-instruction paths of the secondary instruction point P12 are created.

After STEP 204 is carried out, when the first condition and the second condition are applied in STEP 205, a secondary motion path illustrated in Fig. 21 (a) is created. A secondary motion path of Fig. 21 (b) is not selected because it does not satisfy the first condition for extracting paths in which the sum of the central angles of two arcs is minimum. Further, the secondary motion path of Fig. 21 (b) is not selected also because it does not satisfy the second condition for extracting paths with a shorter movement distance.

Meanwhile, in a case where there is an especially strong requirement to suppress vibration at a specific secondary instruction point, it may be preferable that the fourth condition for extracting paths in which the central angle of an arc adjacent to the specific secondary instruction point is minimum is set with precedence over the first condition and the second condition. The secondary motion path of Fig. 21 (b) is a secondary motion path created when the fourth condition is set for the secondary instruction point P12. The secondary motion path illustrated in Fig. 21 (b), in which the central angle of the arc of the candidate circle C13 is 90 degrees, includes paths in which the central angle of an arc adjacent to the secondary instruction point P12 is minimum among combinations of the candidate circles C11 to C14.

In this manner, the fourth condition that takes precedence over the first condition and the second condition may be added to the control program 63 to carry out STEP 205. In addition, the third condition that takes precedence over the fourth condition may be added in STEP 205.

### (Variation of Secondary Motion Path for Performing Measurement on Workpiece-by-workpiece Basis)

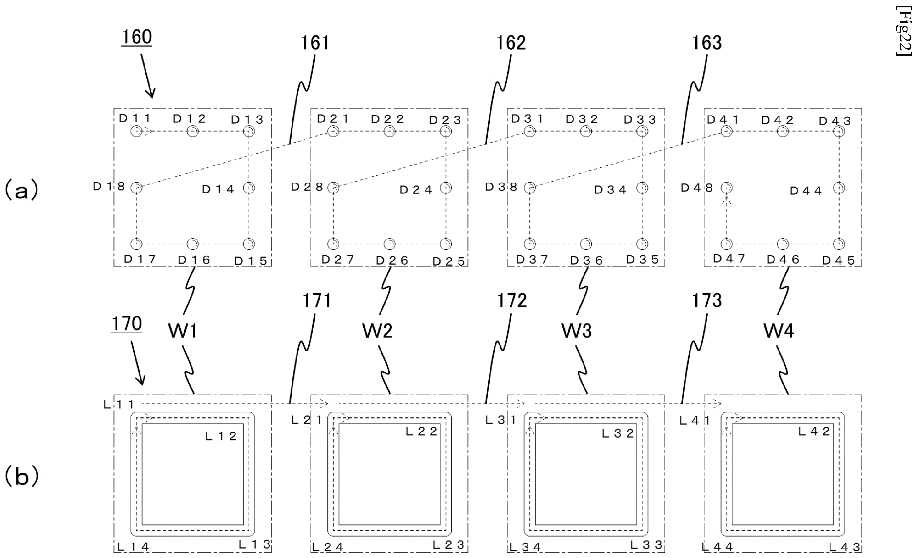

Fig. 22 (a) is a diagram explaining a first motion path 160 connecting first instruction points D for spot application that are set for each of a plurality of workpieces W1 to W4 disposed in the same plane, and Fig. 22 (b) is a diagram explaining a first motion path 170 connecting first instruction points L for line application that are set for each of a plurality of workpieces W1 to W4 disposed in the same plane. In the examples of Fig. 22 (a) and (b), the four workpieces W1 to W4 having the same application points are arranged along one direction on a basal plate.

In application work on the first motion path 160 illustrated in Fig. 22 (a), spot application starts from a point D11 of the workpiece W1, and the spot application is performed in the order D12, D13, ···, D18. After the spot application has been performed up to the point D18, movement to a point D21 that is a first instruction point of a next workpiece is performed along a dotted line, and spot application is similarly performed in the order D21, D22, ···. A point D48 of the workpiece W4 is the last application point. Each first instruction point is connected by a straight path with the shortest distance. Movement paths 161 to 163 connecting workpieces are also straight paths with the shortest distance.

In application work on the first motion path 170 illustrated in Fig. 22 (b), line application starts from a first instruction point L11 of the workpiece W1, passes through first instruction points L12, L13, L14 in this order, and returns to the point L11, where the rectangular line application to the workpiece W1 ends. Subsequently, movement from the first instruction point L11 to a first instruction point L21 of the workpiece W2 is performed, and rectangular line application to the workpiece W2 is performed by passing through first instruction points L22, L23, L24 in this order. Similarly, movement to a first instruction point L31 of the workpiece W3 is performed, and rectangular line application to the workpiece W3 is performed. Subsequently, movement to a first instruction point L41 of the workpiece W4 is performed, and rectangular line application to the workpiece W4 is performed. Movement paths 171 to 173 connecting workpieces are paths for moving without performing work and configured as straight paths with the shortest distance. Although the movement paths 171 to 173 are drawn on the upper side of the first instruction points L11, L21, L31, L41 for convenience of illustration, the movement paths 171 to 173 are paths connecting the first instruction points L11, L21, L31, L41.

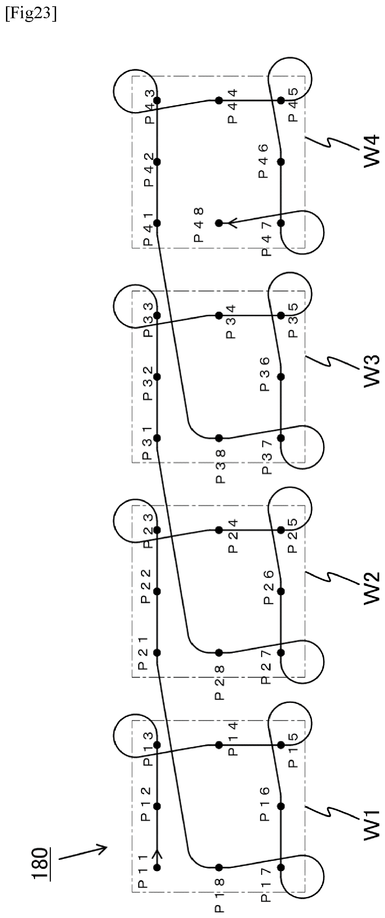

Fig. 23 is a diagram explaining a secondary motion path 180 for performing measurement at secondary instruction points set for each of a plurality of workpieces disposed in the same plane on a workpiece-by-workpiece basis. This secondary motion path 180 can be used not only in combination with the first motion path 160 but also in combination with the first motion path 170. For example, the first instruction points L11, L12, L13, and L14 correspond to secondary instruction points P11, P13, P15, and P17, respectively. The secondary motion path 180 illustrated in Fig. 23 is a one-stroke path in which secondary motion paths set in the respective workpieces are connected, and has thirty-two secondary instruction points serving as measurement points of the positional information measuring device 30. Each of the workpieces W1 to W4 has eight secondary instruction points. Coordinates of the thirty-two secondary instruction points of the secondary motion path 180 are the same as those of the thirty-two first instruction points of the first motion path 160, and a start point and an end point of the motion path are also the same as those of the first motion path 160.

Every secondary instruction point serving as a pass point of the secondary motion path 180 includes a pre-instruction-point path and a post-instruction-point path that are composed of straight paths. For a secondary instruction point located at a corner to be a direction change portion, an arc path with a central angle of 270 degrees is provided immediately after the post-instruction-point path. For example, in the workpiece W1, a post-instruction-point path composed of a straight path is provided immediately after the secondary instruction point P13 located at a corner, and an arc path with a central angle of 270 degrees is provided immediately after the post-instruction-point path. Also, for the secondary instruction points P15 and P17, post-instruction-point paths and arc paths with a central angle of 270 degrees are similarly provided. As every direction change portion of the secondary motion path 180 is also configured by combining a pre-arc straight path, an arc path, and a post-arc straight path, vibration and inertial force that occur in the arc path are minimum, and they attenuate in the post-arc straight path even if they occur. Note that a pre-instruction-point path composed of a straight path may be provided for the secondary instruction point P11 serving as a path start point, and a post-instruction-point path composed of a straight path may be provided for the secondary instruction point P48 serving as a path end point.

In the secondary motion path 180 described above, by providing pre- and post-instruction-point paths composed of straight paths before and after a secondary instruction point, it becomes possible to measure positional information at the secondary instruction point while moving at a constant speed, which solves the problem of erroneous measurement due to vibration and inertial force. Further, since the positional information measuring device 30 enters each secondary instruction point through a pre-instruction-point path that overlaps the first motion paths 160 and 170 and enters from the same direction as the first motion paths 160 and 170, it is possible to solve the problem of coordinate discrepancy that occurs when feedback correction is performed based on the positional information acquired by the positional information measuring device 30.

### (Variation of Secondary Motion Path for Performing Measurement across Workpieces)

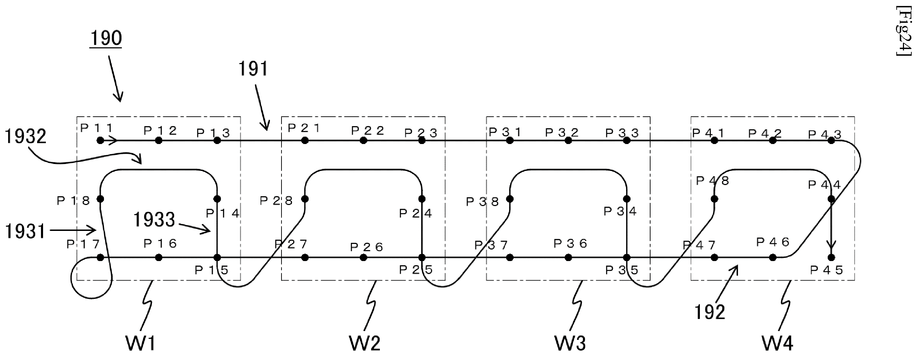

Fig. 24 is a diagram explaining a secondary motion path 190 passing through secondary instruction points P1 to P48 set for each of a plurality of workpieces disposed in the same plane across the workpieces. The example of Fig. 24 can also be used in combination with each of the first motion paths 160 and 170. The secondary motion path 190 illustrated in Fig. 24 is a one-stroke path set across the workpieces W1 to W4, and has secondary instruction points P1 to P48 serving as measurement points of the positional information measuring device 30. Each of the workpieces W1 to W4 has eight secondary instruction points. Coordinates of the thirty-two secondary instruction points of the secondary motion path 190 are the same as those of the thirty-two secondary instruction points of the secondary motion path 180, and the secondary instruction points P11 serving as a start point of the motion path are also common. However, an end point of the secondary motion path 190 is the secondary instruction point P45 unlike the secondary motion path 180.

Every secondary instruction point serving as a pass point of the secondary motion path 190 includes a pre-instruction-point path and a post-instruction-point path that are composed of straight paths. As every direction change portion of the secondary motion path 190 is also configured by combining a pre-arc straight path, an arc path, and a post-arc straight path, vibration and inertial force that occur in the arc path are minimum, and they attenuate in the post-arc straight path even if they occur.

In the secondary motion path 190, measurement is performed at twelve secondary instruction points P11 to P43 on a far side (upper portion of Fig. 24) of the workpieces W1 to W4 while moving in a single pass from the leftmost workpiece W1 to the rightmost workpiece W4 along a crossing path 191 composed of a straight path, and then at eleven secondary instruction points P46 to P17 on a near side while moving in a single pass from the rightmost workpiece W4 to the leftmost workpiece W1 along a crossing path 192 composed of a straight path. Here, the positional information measuring device 30 performs measurement of positional information at the secondary instruction points P46, P47, P36, P37, P26, P27, P16, P17 but does not perform measurement at the secondary instruction points P35, P25, P15 because entrance directions thereto do not match entrance directions of a first motion path. For the secondary instruction points P35, P25, P15, measurement of positional information is performed by creating a path of which entrance directions match the entrance directions of the first motion path. For example, for the secondary instruction point P15 of the workpiece W1, the positional information measuring device 30 performs measurement of positional information when entering the secondary instruction point P15 through a communication path 1931, a communication path 1932, and a communication path 1933.

In the secondary motion path 190 described above, by providing pre- and post-instruction-point paths composed of straight paths before and after a secondary instruction point, it becomes possible to measure positional information at the secondary instruction point while moving at a constant speed, which solves the problem of erroneous measurement due to vibration and inertial force. Further, since the positional information measuring device 30 enters each secondary instruction point through a pre-instruction-point path that overlaps the first motion paths 160 and 170 and enters from the same direction as the first motion paths 160 and 170, it is possible to solve the problem of coordinate discrepancy that occurs when feedback correction is performed based on the positional information acquired by the positional information measuring device 30. In addition, since the secondary motion path 190 has a long straight path crossing the workpieces, high-speed movement along the long straight path can shorten the measurement time.

### (Arc Path of Composite Arcs)

The above-described control program 63 can count a preset ellipse or circle composed of composite arcs in the above-described combination of candidate circles.

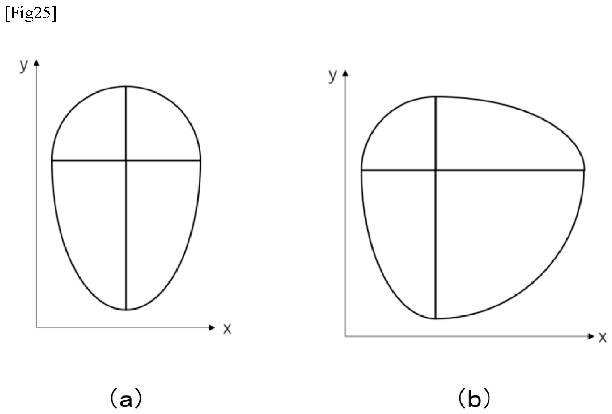

Fig. 25 is a diagram explaining an example in which an arc path set in each secondary motion path described above is an arc path of composite arcs. A first circle composed of composite arcs illustrated in Fig. 25 (a) is a circle having a semicircle of a perfect circle at an upper side and a semi-ellipse at a lower side. A candidate circle of the present invention can also be realized using such a circle composed of composite arcs. Fig. 25 (a) illustrates an example of a circle suitable for a case where longer time is required for acceleration in the positive direction and deceleration in the negative direction along the Y-axis.

A second circle composed of composite arcs illustrated in Fig. 25 (b) is a circle having a quadrant arc of a perfect circle with a first radius at an upper left, quadrant arcs of an ellipse at an upper right and a lower left, and a quadrant arc of a perfect circle with a second radius at a lower right. Fig. 25 (b) illustrates an example of a circle suitable for a case where longer time is required for deceleration in the positive direction and acceleration in the negative direction along the X-axis, and for acceleration in the positive direction and deceleration in the negative direction along the Y-axis.

In this manner, in the present invention, by counting an ellipse or a circle composed of composite arcs in a candidate circle, it becomes possible to provide an arc path with a shorter movement distance to constitute a secondary motion path, and to further suppress vibration and inertial force that occur when the positional information measuring device 30 moves along the arc path.

The preferred embodiment examples and variations of the present invention have been described above. However, the technical scope of the present invention is not limited to the descriptions of the above-described embodiments. Various alterations and modifications can be applied to the above-described embodiment examples, and such altered or modified modes also fall within the technical scope of the present invention.

### List of Reference Symbols

1, 101: work robot / 2, 102: base / 3, 103: work head / 4, 104: workpiece basal plate / 11, 111: first-direction driving device / 12, 112: second-direction driving device / 13, 113: third-direction driving device / 14, 114: attachment member / 15: no-entry area / 20, 120: discharge device / 30, 130: positional information measuring device / 40: first motion path (first embodiment example) / 50: secondary motion path (first embodiment example) / 60: robot control device / 70: secondary motion path (second embodiment example) / 80: first motion path (third embodiment example) / 90: secondary motion path (third embodiment example) / 140: first motion path of comparative example / 150: secondary motion path of comparative example / 160: first motion path for spot application (fourth embodiment example) / 170: first motion path for line application (fourth embodiment example) / 180: secondary motion path (fourth embodiment example) / 190: secondary motion path (fourth embodiment example) / 411 to 416, 811 to 813: first communication path / 421 to 424: bend point / 511 to 514, 711 to 713, 911 to 913: secondary communication path / 521 to 527, 721 to 723, 921 to 926: arc path / 531 to 534, 731 to 733, 931 to 933: pre-instruction-point path / 541 to 545, 741 to 743, 941 to 944: post-instruction-point path / p: first instruction point / P: secondary instruction point / W: target workpiece

## Claims

1. A work robot control method comprising:
a step of creating a first motion path having three or more first instruction points and a direction change portion;
a step of creating a secondary motion path having three or more secondary instruction points set on the first motion path and an arc path;
a step of acquiring positional information at or in a vicinity of the secondary instruction points while moving a positional information measuring device along the secondary motion path;
a step of correcting coordinates of the first instruction points of the first motion path based on the positional information; and
a step of performing work by a working device at one or more of the first instruction points while moving the working device along the corrected first motion path,
wherein the step of creating the secondary motion path includes providing a pre-instruction-point path that is a straight path entering a secondary instruction point serving as a pass point and a post-instruction-point path that is a straight path provided immediately after the secondary instruction point and collinear with the pre-instruction-point path, and
the pre-instruction-point path or the post-instruction-point path is continuous with the arc path.

2. The work robot control method according to claim 1, wherein the pre-instruction-point path is a straight path that overlaps the first motion path and enters the secondary instruction point from a same direction as the first motion path, or a straight path that is a tangent line to the direction change portion and enters the secondary instruction point from the same direction as the first motion path.

3. The work robot control method according to claim 1, wherein each of secondary instruction points serving as pass points on the secondary motion path has a pre-instruction-point path that is a straight path entering the secondary instruction point and a post-instruction-point path that is a straight path collinear with the pre-instruction-point path.

4. The work robot control method according to claim 1, wherein the step of creating the secondary motion path includes providing a pre-arc straight path and a post-arc straight path to every arc path.

5. The work robot control method according to claim 1, wherein the secondary instruction points serving as pass points include a secondary instruction point A and a secondary instruction point B adjacent to the secondary instruction point A,
the arc paths include an arc path A and an arc path B,
the pre-instruction-point paths include a pre-instruction-point path A that is a straight path entering the secondary instruction point A and a pre-instruction-point path B that is a straight path entering the secondary instruction point B, and
the post-instruction-point paths include a post-instruction-point path A that is a straight path provided immediately after the secondary instruction point A and collinear with the pre-instruction-point path A and a post-instruction-point path B that is a straight path provided immediately after the secondary instruction point B and collinear with the pre-instruction-point path B,
wherein the post-instruction-point path A acts as a pre-arc straight path A continuous with the arc path A, and
the pre-instruction-point path B acts as a post-arc straight path B continuous with the arc path B.

6. The work robot control method according to claim 5, wherein the step of creating the secondary motion path includes providing a post-arc straight path A provided immediately after the arc path A and a pre-arc straight path B provided immediately before the arc path B.

7. The work robot control method according to claim 5, wherein the step of creating the secondary motion path includes selecting, as the arc path A, a path following an arc of one of a first circle and a second circle that are tangent to the post-instruction-point path and face each other, the arc satisfying a first condition that the arc has a minimum central angle and/or a second condition that the arc has a minimum distance, and
selecting, as the arc path B, a path following an arc of one of a third circle and a fourth circle that are tangent to the post-arc straight path and face each other, the arc satisfying the first condition that the arc has a minimum central angle and/or the second condition that the arc has a minimum distance.

8. The work robot control method according to claim 7, wherein a no-entry area is set in a coordinate system of the secondary motion path, and
the step of creating the secondary motion path includes selecting, as the arc path A and the arc path B, arc paths that do not enter the no-entry area.

9. The work robot control method according to claim 6, wherein the arc path A is a path following an arc of one out of a first circle and a second circle that are tangent to an end point of the post-instruction-point path A and face each other, and
the arc path B is a path following an arc of one out of a third circle and a fourth circle that are tangent to a start point of the pre-instruction-point path B and face each other.

10. The work robot control method according to claim 9, wherein the step of creating the secondary motion path includes selecting, as the arc paths A and B, a combination of arc paths selected from among combinations of paths following arcs of two circles out of the first to fourth circles, the arc paths satisfying a first condition that a sum of central angles of the arcs of the two circles is minimum and/or a second condition that a movement distance is minimum.

11. The work robot control method according to claim 10, wherein the step of creating the secondary motion path includes selecting, as the arc paths A and B, a combination of arc paths selected from among combinations of paths following arcs of two circles out of the first to fourth circles, the arc paths satisfying a fourth condition that a central angle of an arc of a circle adjacent to a specific secondary instruction point becomes minimum, the fourth condition being applied with precedence over the first condition and the second condition.

12. The work robot control method according to claim 8, wherein the arc paths A and B include an arc path of an ellipse and/or an arc path of a circle composed of composite arcs.

13. The work robot control method according to claim 1, wherein any two adjacent secondary instruction points have different X-coordinates and different Y-coordinates.

14. The work robot control method according to claim 1, wherein the step of creating the secondary motion path includes selecting, as the arc path A, an arc path that is a path following an arc of one out of a first circle and a second circle that are tangent to the post-instruction-point path and face each other, the arc path satisfying a first condition that the arc has a minimum central angle and/or a second condition that the arc has a minimum distance.

15. The work robot control method according to claim 1, wherein a number of the secondary instruction points is smaller than a number of the first instruction points.

16. The work robot control method according to claim 1, wherein the secondary instruction points include one or more first instruction points selected from the first instruction points.

17. The work robot control method according to claim 1, wherein in the first motion path, any adjacent first instruction points are connected by a straight path.

18. The work robot control method according to claim 1, wherein the first motion path includes one or more paths for moving without performing work between first instruction points, and each of the paths for moving without performing work is a straight path.

19. The work robot control method according to claim 4, wherein the post-arc straight path is a path intersecting the secondary motion path located upstream of the post-arc straight path.

20. The work robot control method according to claim 1, wherein the step of acquiring positional information includes moving the positional information measuring device at a speed higher than an average movement speed of the working device.

21. The work robot control method according to claim 1, wherein the step of acquiring positional information includes moving the positional information measuring device at a speed three times an average movement speed of the working device or higher.

22. The work robot control method according to claim 1, wherein the arc path includes an arc path of an ellipse and/or an arc path of a circle composed of composite arcs.

23. The work robot control method according to claim 1, wherein the working device is a discharge device, and
the step of performing work at the first instruction points includes causing the working device to perform application while moving with a height maintained constant.

24. The work robot control method according to claim 1, wherein the positional information measuring device is a laser ranging device configured to measure a relative distance to a target to be measured.

25. The work robot control method according to any one of claims 1 to 24, wherein the working device and the positional information measuring device are moved in a relative manner by a relative driving device including a first-direction driving device configured to move forward and backward a work head on which the working device is mounted along a beam member in a first direction and a second-direction driving device configured to move forward and backward a table that holds a workpiece along a second direction intersecting the first direction.

26. A work robot comprising:
a working device configured to perform work on a workpiece;
a positional information measuring device configured to acquire positional information of the workpiece;
a relative driving device configured to move the working device and the positional information measuring device relative to the workpiece; and
a control device configured to control operation of the working device, the positional information measuring device, and the relative driving device,
wherein the control device is configured to execute:
a step of creating a first motion path having three or more first instruction points at which the working device performs work and a direction change portion;
a step of creating a secondary motion path having three or more secondary instruction points set on the first motion path and an arc path;
a step of acquiring positional information at or in a vicinity of the secondary instruction points while moving the positional information measuring device along the secondary motion path;
a step of correcting coordinates of the first instruction points of the first motion path based on the positional information; and
a step of performing work by the working device at one or more of the plurality of first instruction points while moving the working device along the corrected first motion path,
wherein in the step of creating the secondary motion path, the control device is configured to provide a pre-instruction-point path that is a straight path entering a secondary instruction point serving as a pass point and a post-instruction-point path that is a straight path provided immediately after the secondary instruction point and collinear with the pre-instruction-point path, and
the pre-instruction-point path or the post-instruction-point path is continuous with the arc path.

27. The work robot according to claim 26, wherein the working device is a discharge device, and
in the step of performing work, the control device is configured to cause the working device to perform application while moving with a height maintained constant.

28. The work robot according to claim 27, wherein in the step of performing work, the control device is configured to cause application to be continuously performed in a predetermined range of the first motion path including the first instruction point.

29. The work robot according to claim 26, wherein the positional information measuring device is a laser ranging device configured to measure a relative distance to a target to be measured.

30. The work robot according to claim 26, wherein the control device includes a first measurement command function of causing the positional information measuring device to acquire positional information at the secondary instruction points and a second measurement command function of causing the positional information measuring device to acquire positional information on the pre-instruction-point path, either one of the first measurement command function and the second measurement command function being executed in the step of acquiring positional information.

31. The work robot according to claim 30, wherein the second measurement command function includes a function of extending the pre-instruction-point path to an upper stream side by a distance between the secondary instruction point and a measurement position on the pre-instruction-point path and shortening the post-instruction-point path by the distance between the secondary instruction point and the measurement position on the pre-instruction-point path.

32. The work robot according to any one of claims 26 to 31, wherein the relative driving device includes a first-direction driving device configured to move forward and backward a work head on which the working device is mounted along a beam member in a first direction and a second-direction driving device configured to move forward and backward a table that holds the workpiece along a second direction intersecting the first direction.
